# EUROPEAN PATENT APPLICATION

(11) **EP 4 848 233 A1**
(43) Date of publication of application: **02.12.2026**
(21) Application number: 26180930.5
(22) Date of filing: 26.05.2026
(51) Int. Cl.: G06V 20/56, G06V 10/26, G06V 10/44, G06V 10/80, G06V 10/82, G06V 20/10

(54) **AGRICULTURAL VEHICLES INCLUDING AN IMAGING CONTROLLER, AND RELATED METHODS**

(30) Priority: 30.05.2025 GB 202508435
(71) Applicant: AGCO International GmbH, 8212 Neuhausen am Rheinfall (CH)
(72) Inventor: Christiansen, Martin Peter, 8930 Randers (DK); Mujkic, Esma, 8930 Randers (DK); Slezák, Filip, 8930 Randers (DK); Beck, Nicolai, 8930 Randers (DK); Toustrup, Viktor Johns, 8930 Randers (DK); Jensen, Anders, 8930 Randers (DK)
(74) Representative: AGCO Intellectual Property Department

(57) **Abstract**

An agricultural vehicle includes one or more cameras and at least one LiDAR system operably coupled to the agricultural vehicle, and an imaging controller operably coupled to the LiDAR system and cameras. The imaging controller includes a processor, and instructions to receive image data from the cameras, receive LiDAR data from the LiDAR system, process the image data to classify pixels therein and identify agricultural objects therein, the agricultural objects including a crop edge, create a point cloud using the LiDAR data, and fuse the image data with the LiDAR data to generate a fused point cloud. The instructions include segmenting the fused point cloud to refine positional and dimensional information of the agricultural objects therein to generate a refined point cloud. Related agricultural vehicles and methods are disclosed including automated control of the vehicles based on the refined point cloud to interact with the crop edge.

## Description

### CROSS-REFERENCE TO RELATED APPLICATION

### FIELD

Embodiments of the present disclosure relate generally to agricultural vehicles including one or more cameras, at least one LiDAR, and an imaging controller configured to determine (e.g., image and analyze) agricultural objects surrounding the agricultural vehicle in an agricultural environment to facilitate one or more control operations of the agricultural vehicle, and to related systems and methods.

### BACKGROUND

Agricultural operations, such as planting, tilling, or spraying, are conventionally performed in a field. The field may include obstacles, such as bumps, rocks, animals, humans, windmills, poles, etc. that should be avoided by the agricultural vehicle performing the agricultural operation. However, an operator of the agricultural vehicle may not see the obstacle or may see the obstacle but may not be able to control the agricultural vehicle in time to avoid hitting the obstacle. The environment in which the agricultural operations are performed may include many unknowns (e.g., wild animals, farm animals, grazing animals, boulders, other agricultural implements and vehicles (e.g., trailers, tractors, combines, planters, implements) that are not typically found on traveled roadways (e.g., paved roads, streets, highways, freeways). Agricultural objects such as plant species, plant structures, or the like may be difficult to differentiate between the ground, undergrowth, weeds, or the like. For example, agricultural objects may be obscured by colors, uneven ground, in or behind rows of crops, behind bushes or tress, or in fields of hay or grass. The disparate objects and animals that may be found in an agricultural environment impart unpredictability and make operation of agricultural vehicles particularly difficult.

### BRIEF SUMMARY

According to at least some embodiments, an agricultural vehicle includes one or more cameras operably coupled to the agricultural vehicle, at least one LiDAR system operably coupled to the agricultural vehicle, and an imaging controller operably coupled to the at least one LiDAR system and the one or more cameras. The imaging controller of the agricultural vehicle includes at least one processor; and at least one non-transitory computer-readable storage medium having instructions thereon that, when executed by the at least one processor, cause the imaging controller to receive image data from the one or more cameras; process the image data to classify pixels therein and identify one or more agricultural objects therein, wherein the one or more agricultural objects includes a crop edge; receive LiDAR data from the at least one LiDAR system; create a point cloud using the LiDAR data; fuse the image data to the point cloud to generate a fused point cloud having the image data fused to corresponding points within the point cloud; and segment the fused point cloud to refine positional information and dimensional information of the one or more agricultural objects within the fused point cloud to generate a refined point cloud.

The imaging controller may include instructions thereon that, when executed by the processor, identify a one or more boundaries of the crop edge, a curvature of the crop edge, and a volume of crops spaced from the crop edge in a longitudinal direction of the crop edge based on one or more of the image data, the fused point cloud, or the refined point cloud.

The imaging controller may include additional instructions thereon that, when executed by the processor, identify a surface curvature of one or more sections of the crop edge from one or more of the image data, the fused point cloud, or the refined point cloud, and generate a volume estimate for sections of crops spaced inwardly from the crop edge, from one or more of a surface curvature of the crop edge or information about material types of crops forming the crop edge. In some embodiments, the information about material types in the crop edge includes classified pixels from the image data identifying one or more plants species within the crop edge.

The imaging controller may include instructions thereon that, when executed by the at least one processor, cause the imaging controller to process the image data from the one or more cameras using one or more agricultural object detection deep neural networks trained with an agricultural dataset to generate labeled image data, analyze the LiDAR data in the point cloud using a point cloud detection deep neural network trained with another agricultural dataset to generate the point cloud having labeled LiDAR data, and fuse the labeled image data with the labeled LiDAR data to form the fused point cloud having labeled image data and labeled LiDAR data therein.

The at least one LiDAR system may include a flash LiDAR having at least one light emitter and at least one LiDAR sensor, and at least one of the one or more cameras is located within 1 meter of the at least one LiDAR sensor and has a field of view that at overlaps with a field of view of the at least one LiDAR sensor.

The imaging controller may include instructions thereon that, when executed by the at least one processor, cause the imaging controller to cause the at least one LiDAR system to generate the LiDAR data at a plurality of instances and the one or more cameras to generate the image data contemporaneously with the LiDAR data at the plurality of instances. The imaging controller may include instructions thereon that, when executed by the at least one processor, cause the imaging controller to fuse the image data of corresponding instances to the point cloud to generate the fused point cloud having the image data mapped to LiDAR data points of corresponding instances within the point cloud.

The imaging controller may include instructions thereon that, when executed by the at least one processor, cause the imaging controller to perform one or more object segmentation operations on the image data using an object detection deep neural network trained with an agricultural dataset to identify the one or more agricultural objects therein.

The imaging controller may include instructions thereon that, when executed by the at least one processor, cause the imaging controller to segment the fused point cloud to differentiate between one or more crops in the crop edge and ground there beneath.

The imaging controller may include instructions thereon that, when executed by the at least one processor, cause the imaging controller to segment the fused point cloud to differentiate between one or more crops in the crop edge and one or more of undergrowth or weeds.

The agricultural vehicle may include at least one additional controller configured to perform one or more control operations of the agricultural vehicle based on at least one of the image data, the fused point cloud, or the refined point cloud. The at least one additional controller may include at least one additional processor; and at least one additional non-transitory computer-readable storage medium having instructions thereon that, when executed by the at least one processor, cause the at least one additional controller to receive the refined point cloud with the positional information and the dimensional information of the one or more agricultural objects therein, and generate a route map for controlling the agricultural vehicle to interact with the crop edge and any other agricultural objects identified within the refined point cloud. The at least one additional controller may include instructions that, when executed by the at least one processor, cause the agricultural vehicle to align wheels of the agricultural vehicle next to the crop edge or align an agricultural implement associated with the agricultural vehicle to interact with one or more crops paced inwardly from the crop edge. The at least one additional controller may include instructions that, when executed by the at least one processor cause the at least one additional controller to adjust a speed of the agricultural vehicle based on curvature of the crop edge.

The fused point cloud may include metadata from the image data, the metadata including one or more of a timestamp, location data, color data, near infrared data, short-wave infrared data, segmentation data, or classification data.

The imaging controller may include instructions thereon that, when executed by the at least one processor, cause the imaging controller to perform at least one segmentation operation on the image data to generate segmented image data.

The imaging controller may include instructions thereon that, when executed by the at least one processor, cause the imaging controller to log global position data of the agricultural vehicle, receive a pulse signal from a global navigation satellite system, cause the at least one LiDAR system to capture the LiDAR data based on the pulse signal, and cause the one or more cameras to capture the image data based on the pulse signal contemporaneously with causing the at least one LiDAR system to capture the LiDAR data based on the pulse signal.

The imaging controller may include instructions thereon that, when executed by the at least one processor, cause the imaging controller to perform an image rectification operation on the image data from the one or more cameras prior to fusing the image data to the point cloud.

According to at least some embodiments, a method of operating an agricultural vehicle in an agricultural field includes receiving image data from one or more cameras operably coupled to the agricultural vehicle. The method includes processing the image data to classify pixels therein and identify one or more agricultural objects therein, wherein the one or more agricultural objects include a crop edge. The method includes receiving LiDAR data from at least one LiDAR system operably coupled to the agricultural vehicle wherein a field of view of the at least one LiDAR system at least partially overlaps a field of view of the one or more cameras. The method includes creating a point cloud using the LiDAR data. The method includes fusing the image data to the point cloud to generate a fused point cloud having image data mapped to corresponding points within the point cloud. The method includes segmenting the fused point cloud to refine positional information and dimensional information of the one or more agricultural objects within the fused point cloud to generate a refined point cloud. The method includes controlling one or more operations of the agricultural vehicle based on the one or more agricultural objects identified within the refined point cloud.

The method may include identifying boundaries of crop edge, a curvature of the crop edge, and a volume of at crops spaced inwardly from the crop edge in a longitudinal direction of the crop edge based on one or more of the image data, the fused point cloud, or the refined point cloud.

Processing the image data to classify pixels therein and identify one or more agricultural objects therein may include at least one of determining a plurality of key points indicating a position of the crop edge from the image data to build a route map for the agricultural vehicle along the plurality of key points, or applying one or more segmentation masks to the image data to determine the positional information and the dimensional information of the one or more agricultural objects therein. Processing the image data to classify pixels therein and identify one or more agricultural objects therein may include applying one or more segmentation masks to the image data to determine a presence of the one or more agricultural objects therein.

Controlling one or more operations of the agricultural vehicle based on the one or more agricultural objects identified within the refined point cloud includes controlling the agricultural vehicle to align wheels of the agricultural vehicle next to the crop edge effective to avoid running over the crops with the wheels or align an agricultural implement coupled to the agricultural vehicle with crops at least at the crop edge to cause the agricultural implement to interact with the crops.

The method may include causing the at least one LiDAR system to generate LiDAR data at a plurality of instances and causing the one or more cameras to generate the image data contemporaneously with the LiDAR data at the plurality of instances.

According to at least some embodiments and agricultural vehicle includes one or more cameras operably coupled to the agricultural vehicle, at least one LiDAR system operably coupled to the agricultural vehicle, and an imaging controller operably coupled to the at least one LiDAR system and the one or more cameras. The imaging controller of the agricultural vehicle includes at least one processor and at least one non-transitory computer-readable storage medium having instructions thereon that, when executed by the at least one processor, cause the imaging controller to receive image data from the one or more cameras, process the image data to classify pixels therein and identify one or more agricultural objects therein, wherein the one or more agricultural objects include a crop edge; receive LiDAR data from the at least one LiDAR system, create a point cloud using the LiDAR data, fuse the image data to the point cloud to generate a fused point cloud having image data mapped to corresponding points within the point cloud, and segment the fused point cloud to refine positional information and dimensional information of the one or more agricultural objects within the fused point cloud to generate a refined point cloud. The agricultural vehicle includes at least one agricultural implement operably coupled to the agricultural vehicle and at least one additional controller configured to perform one or more control operations of the agricultural vehicle based on at least one of the image data, the fused point cloud, or the refined point cloud.

The at least one additional controller of the agricultural vehicle may include instructions that cause the agricultural vehicle to align the at least one agricultural implement to crops inwardly from the crop edge effective to cause the agricultural implement to interact with the crops.

The at least one agricultural implement may include a harvester, a mower, or a cultivation tool.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified perspective view of an agricultural vehicle including an imaging controller, in accordance with one or more embodiments of the disclosure;
FIG. 2 is a front view of an agricultural vehicle approaching a crop edge, according to at least some embodiments of the disclosure;
FIG. 3 is an overhead view of an agricultural vehicle in an agricultural environment interacting with the crop edge, according at least some embodiments of the disclosure;
FIG. 4 is a perspective view of the agricultural vehicle interacting with the crop edge in the agricultural environment, according to at least one embodiment of the disclosure;
FIG. 5 is a perspective view of the agricultural vehicle interacting with the crop edge in the agricultural environment, according to at least one embodiment of the disclosure;
FIG. 6 is a close-up perspective view of a crop edge, according to at least one embodiment of the disclosure;
FIGS. 7-11 are schematics of algorithms to identify one or more agricultural objects based on image data and LiDAR data, according to at least one embodiment of the disclosure;
FIG. 12 is a schematic of an algorithm to identify one or more agricultural objects based on LiDAR data, according to at least one embodiment of the disclosure;
FIG. 13 is a schematic of an algorithm 1300 to identify one or more agricultural objects based on LiDAR data alone, according to at least one embodiment of the disclosure;
FIG. 14 is a simplified flow chart illustrating a method of identifying one or more agricultural objects in an agricultural environment, in accordance with one or more embodiments of the disclosure;
FIG. 15 is a schematic of a computer device, in accordance with embodiments of the disclosure.

### DETAILED DESCRIPTION

The illustrations presented herein are not actual views of any agricultural vehicles or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure, assembly, spreader, or agricultural implement. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

From reading the following description it should be understood that the terms "longitudinal" and "transverse" are made in relation to a machine's (e.g., agricultural implement's, agricultural application machine) normal direction of travel. In other words, the term "longitudinal" equates to the fore-and-aft direction, whereas the term "transverse" equates to the crosswise direction, or left and right. As used herein, the terms "lateral" and "transverse" are used interchangeably. Furthermore, the terms "axial" and "radial" are made in relation to a rotating body such as a shaft, wherein axial relates to a direction along the rotation axis and radial equates to a direction perpendicular to the rotation axis.

According to embodiments described herein, an agricultural vehicle (also referred to as a "vehicle") includes an imaging controller configured to detect one or more agricultural objects (e.g., plant types, plant structure types, wildlife, other agricultural vehicles, obstacles in the field) including a crop edge or crop edges in an agricultural environment during one or more agricultural operations. The vehicle is configured to perform the agricultural operations safely without unintentional contact between the vehicle (or an implement associated therewith) and the one or more agricultural objects detected by the vehicle. The vehicle may include one or more cameras (e.g., multiple cameras) and one or more LiDAR systems operably coupled thereto. The one or more cameras are configured to generate image data and the at least one LiDAR system is configured to generate LiDAR data. The vehicle may include a computing system including the imaging controller configured to receive the image data and the LiDAR data, perform object detection on one or both of the image data (e.g., metadata) and the LiDAR data. The imaging controller is configured to fuse the image data and the LiDAR data to detect the one or more agricultural objects in the agricultural environment including positional and dimensional information of the at least one agricultural object (e.g., crop edge). The computing system may be configured to perform one or more control operations based on the image data, LiDAR data, or fused data and/or provide instructions to a navigation controller or another controller of the vehicle to control one or more operations (e.g., acceleration, velocity, braking, steering) of the vehicle.

More specifically, embodiments disclosed herein relate to agricultural vehicles having image capturing systems (e.g., cameras), LiDAR systems, and an imaging controller configured to identify a crop edge and collect dimensional and positional information about at crop edge in the agricultural environment. The dimensional information (e.g., volume, left or right boundaries of the crops, curvature) and positional information may be used to selectively control the position of the agricultural vehicle to interact with the crop edge or crops spaced inwardly therefrom. For example, interacting with the crop edge may include controlling the agricultural vehicle to avoid running over the crops therein with a wheel, positioning an agricultural vehicle or agricultural implement operably coupled thereto to avoid running over the crops, positioning or maintaining an agricultural implement (e.g., intake of harvester) at a selected position inwardly from the crop edge, or modulating the speed of the agricultural vehicle based on the position of the crop edge, the volume of the crops spaced inwardly from the crop edge, or both.

The embodiments disclosed herein provide more accuracy, faster processing speeds, and utilizes less computing power for processing one or more of image data, LiDAR data, point clouds, fused point clouds, and refined point clouds to identify and automatically control interaction with the one or more agricultural objects identified and located within the agricultural environment than in vision systems that do not utilize the vehicles, systems, and methods disclosed herein.

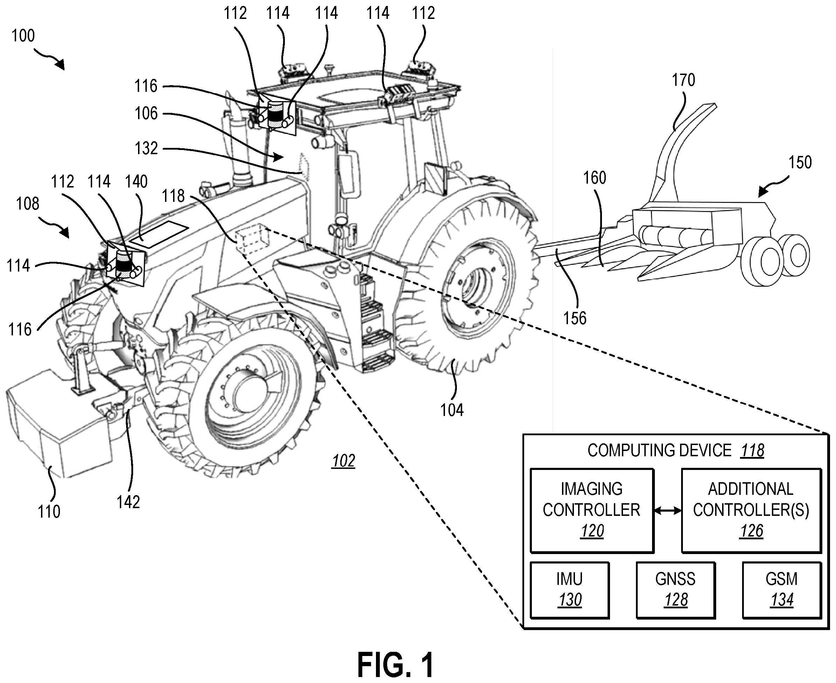

FIG. 1 is a simplified perspective view of an agricultural vehicle 100 (simply referred to herein as a "vehicle"), according to one or more embodiments. The vehicle 100 includes at least one vision system 112 configured to capture image data and LiDAR data of an agricultural environment. The vision system 112 includes one or more cameras 114 and at least one LiDAR system 116 operably coupled to an imaging controller 120 to capture image data and LiDAR data, respectively. The agricultural vehicle 100 includes the imaging controller 120 and at least one additional controller 126 as part of a computing device 118 configured to control imaging and image processing of the agricultural environment around the agricultural vehicle as well as navigation and (autonomous) control of the agricultural vehicle. The imaging controller 120 is configured to initiate image data and LiDAR data capturing with the vision system 112 and process the image data and LiDAR data to identify one or more agricultural objects therein (e.g., crop edge). The at least one additional controller 126 are configured to selectively control one or more operations of the agricultural vehicle, such as navigation, steering, speed control, or the like responsive to the one or more agricultural objects identified by the imaging controller 120.

In some embodiments, the vehicle 100 includes a tractor. However, the vehicle 100 may include agricultural vehicles other than and/or in addition to a tractor, such as, for example, a combine, a planter, a tiller, a sprayer, a harvester, a row cleaner, seed planter, a fertilizer, a swather, a mower, a spreader, a cultivator, or another agricultural vehicle. The agricultural vehicle 100 may include one or more agricultural implements 150 operably coupled thereto. For example, the agricultural implement 150 may include one or more of a combine, a seed planter, a row cleaner, a tiller, a sprayer, a harvester, a fertilizer, a swather, a mower, a spreader, a baler, a chopper, a disc plow, a disc harrow, or the like. Such agricultural implements 150 may be towed, carried, or moved by the agricultural vehicle 100.

The vehicle 100 may be configured to drive over a ground 102, such as a field. As described in further detail herein, the field may include agricultural objects, such as one or more of crops (e.g., plants including standing, cut, swath(s)), undergrowth, weeds, trees), rocks, agricultural equipment, animals (e.g., livestock), humans, or other objects and/or animals that may be found in an agricultural environment. The systems, agricultural vehicles, and methods disclosed herein are used to identify and interact with (e.g., navigate through, navigate around, spray, cultivate, clean adjacent to, intake, harvest, mow) one or more agricultural objects including the crops at and/or behind the crop edge in the agricultural environment. The vehicle 100 includes tires 104 configured for facilitating traversal of the vehicle 100 over the ground 102.

The vehicle 100 includes an operator cabin 106 from which an operator of the vehicle 100 may control the vehicle 100, and an engine compartment 108 housing an engine or other propulsion system for providing a motive force for moving the vehicle 100. In some embodiments, the propulsion system includes an engine. In some embodiments, the propulsion system includes motors operably coupled to wheels 148 of the vehicle 100. The vehicle 100 includes a steering system (e.g., a steering wheel (located in the operator cabin 106) and associated steering column, universal joint, and rack-and-pinion) configured for facilitating steering and navigation of the vehicle 100. The steering system may be configured to be manually operated by a person or automatically operated by an additional controller operably coupled thereto responsive to at least one of the image data, LiDAR data, or fused versions of both (e.g., fused point cloud). The vehicle 100 may include one or more additional structures or assemblies, such as a header 110, configured for performing one or more agricultural operations (e.g., towing an agricultural implement (e.g., a spreader, row units of a planter), a trailer, etc.

The vision system 112 includes one or more cameras 114 operably coupled to the vehicle 100. The vision system 112 may be configured to facilitate imaging an environment around (e.g., in front of) the vehicle 100, such as during use and operation thereof. The one or more cameras 114 may be operably coupled to the vehicle 100, such as on top of the operator cabin 106, or on top of the engine compartment 108, or on the header 110. For example, the vision system 112 may include one or more cameras 114 positioned in a front-facing direction of or on the vehicle 100. The vision system 112 may include and one or more cameras 114 positioned in a rear-facing direction of the vehicle 100. In some embodiments, the vision system 112 includes multiple cameras 114, such as one at the front, rear, right, left side of the vehicle 100, or any combinations thereof. The one or more cameras may be positioned and directed to capture at least a front facing view of the agricultural environment in front of the agricultural vehicle 100. In some embodiments, the one or more cameras 114 are configured to provide a 3D surround stereo view of the surroundings of the vehicle 100. In some embodiments, each of the one or more cameras 114 is substantially the same. In some embodiments, at least one of the cameras 114 is different than at least another of cameras 114. In some embodiments, the vision system 112 includes only one camera 114 (e.g., a front-facing camera 114).

The one or more cameras 114 may individually include one or more of a 2D-camera, a stereo camera, a time-of-flight (ToF) camera configured to capture 2D and/or 3D image data. The one or more cameras 114 may individually be configured to capture image data. The image data may be grayscale image data, color image data (e.g., in the RGB color space), or multispectral image data. In some embodiments, a ToF camera may facilitate determining depth information and improve an accuracy of image data and object pose determination based on the image data received by the camera(s) 114.

The one or more cameras 114 may include one or more of a red, green, blue (RGB) camera, a RGB-IR camera (configured to provide visible images and thermal (e.g., IR) images), a charge-coupled device (CCD) camera, a complementary metal oxide semiconductor (CMOS) image sensor, a stereoscopic camera, a monoscopic camera, a near infrared (NIR) camera, a long wave infrared camera (LWIR), a short-wave infrared (SWIR) camera (e.g., configured to capture electromagnetic radiation (e.g., light) having a wavelength within a range of from about 0.4 µm to about 2.5 µm, such as from about 0.9 µm to about 1.7 µm or from about 0.4 µm to about 1.9 µm), or a digital single-reflex camera. The one or more cameras 114 are individually configured to capture at least 2D image data. In some embodiments, the one or more cameras 114 are individually configured to capture 3D image data and may include, for example, a stereo camera.

In some embodiments, the one or more cameras 114 include at least one RGB camera. In some embodiments, the one or more cameras 114 include at least one IR camera (e.g., NIR, SWIR, or LWIR). In some embodiments, the one or more cameras 114 include at least one RGB camera, at least one SWIR camera, and at least one LWIR camera. In such examples, the cameras may have at least partially overlapping view with each other or a LiDAR system 116. The SWIR camera and the LWIR camera may be configured to capture image data through smoke, fog, and snow. In some embodiments, the one or more cameras 114 includes an RGB-SWIR line scan camera (a 4-sensor RGB SWIR line scan camera). In some embodiments, the one or more cameras 114 are configured to capture RGB image data, SWIR data, LWIR data, and/or NIR data.

The camera 114 may include at least one optical lens, an optional filter, a detector (e.g., camera sensor), and processing circuitry. The optical lens may collect and direct light from a field of view (FOV) of the camera 114 through the optical filter to the detector. The at least one optical lens may include a fisheye lens, an f-theta lens, a rectilinear lens, or any other type of standard (e.g., a lens with a focal length approximately equal to the diagonal of the detector and providing a field of view representative of what is seen by human eyes) or wide-angle lens (e.g., a lens having a shorter focal length than standard lenses, typically ranging from 24 mm to 35 mm for full-frame cameras and providing a wider field of view than standard lenses and configured to capture a wider FOV than a standard lens). The optional filter may be configured to allow selected spectral bands of electromagnetic radiation (e.g., ultraviolet, infrared, etc.) to pass therethrough, while filtering other spectral bands of electromagnetic radiation from passing therethrough. The detector may include a digital image sensor configured to convert electromagnetic energy to an electric signal and may include image sensing technology such as charge-coupled device (CCD) technology, complementary metal oxide semiconductor (CMOS) technology, or other type of sensor. The detector may be configured to detect a narrow range of wavelengths (e.g., a monochromatic camera sensor) of light, a broad range of wavelengths (e.g., a broad-spectrum camera sensor) or a plurality of ranges of wavelengths of light (e.g., a multi-spectrum camera sensor). For example, the detector may detect visible light, near infrared (NIR) light, mid-infrared (MIR) light, far infrared (FIR) light, ultraviolet (UV) light, light from other portions of the electromagnetic spectrum, or combinations thereof. The processing circuitry may include a circuitry for amplifying and processing the electric signal generated by the detector to generate image data, which is passed to the one or more computing devices, such as the computing device 118 or the imaging controller 120 therein. In some embodiments, the camera includes an f-theta lens such that the camera generates image data including an angle, which may correspond to an angle of LiDAR data generated with the at least one LiDAR system 116.

The one or more cameras 114 are operably coupled to the imaging controller 120 to receive instructions to capture image data and to transfer the image data to the imaging controller 120 for processing.

Each of the one or more cameras 114 may be configured to capture image data at a frame rate within a range of from about 10 Hz to about 30 Hz. In some embodiments, the frame rate of each of the one or more cameras 114 is substantially the same. However, the disclosure is not so limited, and the frame rate of the one or more cameras 114 may be different from one or more of each other and may have a frame rate outside of the range of 10Hz to 30Hz. Each of the one or more cameras 114 may be configured to capture an image responsive to instructions from a controller such as a trigger controller, synchronizer, or imaging controller 120 operably coupled thereto.

Each of the one or more cameras 114 may be substantially the same, or one or more of the cameras 114 may be different than at least another of the cameras 114. For example, in some embodiments, the vision system 112 includes two RGB cameras, and one or both of a SWIR camera, and a LWIR camera. The two RGB cameras may have a different FOV, which may or may not overlap one another. In other embodiments, the two RGB cameras have the same FOV, which may or may not at least partially overlap one another.

In some embodiments, an FOV of each camera 114 may be the same as an FOV of one or more other cameras 114 (e.g., the FOV of each camera 114 may at least partially overlap one another). In other embodiments, the FOV of each camera 114 may be different than the FOV of the other cameras 114. In some embodiments, the FOV of at least one camera 114 may at least partially overlap the FOV of at least another camera 114. For example, a first camera 114 may have a narrower FOV than a second camera 114. A camera 114 with a narrower FOV than another camera 114 may exhibit a greater resolution (e.g., a greater pixel density) than the other camera 114. In some embodiments, the FOV of each individual camera 114 is less than the FOV of the LiDAR system 116.

An FOV of each camera 114 may independently be within a range of from about 30° to about 360°, such as from about 30° to about 60°, about 60° to about 90°, from about 90° to about 120°, about 120° to about 180°, about 180° to about 360°, less than about 180° or less than about 90°. In some embodiments, an FOV of one of a first camera 114 is within a range of from about 60° to about 70°, and an FOV of at least another camera 114 is within a range of from about 190° to about 195°. Any combination of FOVs for the one or more cameras 114 may be present in the vision system 112. As discussed in more detail below, the one or more cameras 114 may have an FOV that at least partially overlaps with an FOV of the at least one LiDAR system 116.

The vision system 112 includes at least one LiDAR system 116 operably coupled to the vehicle 100. The at least one LiDAR system 116 may be operably coupled to the vehicle 100, such as on top of the operator cabin 106, or on top of the engine compartment 108, or on the header 110. The at least one LiDAR system 116 may be oriented in a forward-facing position on the vehicle 100 to collect LiDAR data from the agricultural environment at least in front of the vehicle 100. In some embodiments, the vision system 112 includes only one LiDAR system 116, such as a front-facing LiDAR system 116. In some embodiments, the vision system 112 includes a plurality of LiDAR systems 116, such as a front-facing LiDAR system 116 and a rear facing LiDAR system 116. In such examples, the vision system 112 may also include one or more cameras 114 facing the front and rear of the agricultural vehicle 100.

The at least one LiDAR system 116 may be operably coupled to the imaging controller 120 to receive instructions to capture LiDAR data and to transfer the LiDAR data to the imaging controller 120 for processing.

The at least one LiDAR system 116 may include a light source (e.g., light emitter) and a LiDAR sensor. The light source may be configured to direct light across a LiDAR FOV. The light source may be a monochromatic or broad-spectrum light source. For example, the light source may be a laser light source. The light source may provide visible light, near infrared (NIR) light, mid-infrared (MIR) light, far infrared (FIR) light, ultraviolet (UV) light, light from other portions of the electromagnetic spectrum, or combinations thereof.

The light source may include a scanner (e.g., a mirror or prism) that alters a direction of the light from the light source. The scanner may rotate through a full 360° rotation, while the light is emitted from the light source (and not occluded by another portion of the LiDAR system 116) in the LiDAR FOV. In some embodiments, the scanner oscillates to emit the light in the LiDAR FOV such as with one or more oscillating mirrors. In some embodiments, the scanner includes a phased array of light sources that further allows for scanning and/or replaces the rotating or oscillating scanner. In other embodiments, the LiDAR FOV may be within a range of about 20° to about 190°, about 20° to about 45°, about 30 ° to about 60°, about 45° to 90°, or about 90° to about 190°. In some examples, the LiDAR FOV may be 360°. In some embodiments, the LiDAR FOV may be different than those described.

The LiDAR system 116 includes a LiDAR sensor (e.g., photodetector) configured to detect the light from the light source that is scattered and/or reflected by objects in the environment back to the LiDAR system 116 (e.g., to the LiDAR sensor). The detected light LiDAR sensor includes one or more of a photodetector, a photodiode, or photomultiplier. The LiDAR sensor may be an active sensor integrated with the light source. In some examples, the LiDAR sensor (e.g., photodetector) is separate from the light source and the backscattered light is received through a hole or beam splitter of the scanner.

As described above, the LiDAR system may be configured to receive (e.g., measure, detect) LiDAR data based on the electromagnetic radiation detected with the LiDAR sensor (e.g., with the photodetector). In some embodiments, the LiDAR system 116 generates a LiDAR point cloud based on the detected light. The LiDAR point cloud may be a 3D LiDAR point cloud and may simply be referred to herein as a "3D point cloud." In some embodiments, the LiDAR point cloud is a 2D LiDAR point cloud.

The LiDAR system may include any type of LiDAR, such as a time of flight (TOF) LiDAR, modulation LiDAR (e.g., frequency or amplitude), with a mechanical, Semi-solid, or Solid-state (e.g., microelectromechanical system or optical phase array) scanning system. In some embodiments, the LiDAR system 116 may be configured as a flash LiDAR. The flash LiDAR does not include a scanner, but instead uses single pulses of laser light to illuminate an entire environment and gather almost instantaneous LiDAR data from the entire agricultural environment with range of the LiDAR system 116. Additionally, utilizing a flash LiDAR allows synchronization of LiDAR data collection with image data collection from the one or more cameras 114 for contemporaneous data collection. For example, a synchronization controller or trigger within the imaging system may allow LiDAR data to be contemporaneously (e.g., simultaneously) collected with the image data responsive to capture commands at selected intervals. Accordingly, 2D image data may be correlated and mapped to corresponding points within LiDAR data (e.g., points in a 2D or 3D point cloud).

The at least one LiDAR system 116 has an FOV that at least partially overlaps the FOV(s) of the one or more cameras 114. For example, the FOV of each of the one or more cameras 114 may be the same as an FOV of the LiDAR system 116. In some embodiments, the FOVs of the one or more camera 114 may be different than the FOV of the at least one LiDAR system (e.g., only partially overlaps). In some embodiments, the FOV of at least one camera 114 (e.g., each camera 114) may at least partially overlap the FOV of at least another camera 114 all of which at least partially overlap the FOV of the at least one LiDAR system 116 in the vision system 112. For example, a first camera 114 may have a broader FOV than a second camera 114, and the LiDAR system may have a broader FOV than at least one of the one or more cameras 114. In some embodiments, the FOV of each of the one or more cameras is less than the FOV of the LiDAR system 116. In some embodiments, the FOV of each of the one or more cameras is greater than the FOV of the LiDAR system 116. In some embodiments, the FOV of each of the one or more cameras 114 substantially equal to the FOV of the LiDAR system 116.

In some embodiments, the vision system 112 includes one LiDAR system 116 and multiple cameras 114. In some embodiments, each camera 114 and the LiDAR system 116 are oriented (e.g., face) in the same direction and have substantially the same pose. In some embodiments, the LiDAR system 116 is configured to scan in front of the vehicle 100 and has a 270° or less (e.g., 190° or 90°) field of view. In some embodiments, the LiDAR system 116 is configured to scan around an entirety of the vehicle 100 and has a 360° field of view.

The LiDAR system 116 may directly neighbor one or more of the cameras 114 in the vision system 112. For example, the LiDAR system 116 may vertically overlie the cameras 114, may vertically underlie the cameras 114, may be vertically between the cameras 114, may be located on a lateral side of one or more of the cameras 114, may be positioned horizontally between the one or more cameras, or combinations of any of the foregoing. In some embodiments, the LiDAR system 116 vertically underlies and is positioned between the one or more cameras 114. In some embodiments, the vision system 112 includes three cameras 114 vertically underlying the LiDAR system 116, such as two RGB cameras and one of a SWIR camera and a LWIR camera. In some embodiments, the SWIR camera or the LWIR camera vertically may underlie the RGB camera with a greater FOV than the other RGB camera. In some embodiments the RGB cameras have a same FOV and the at least one LiDAR system 116 is centered with respect to the RGB cameras. The close proximity of the at least one LiDAR system 116 to the one or more cameras 114 also provides a benefit. For example, cameras 114 closely located (e.g., within 1 meter, within 50 cm, within 25 cm, within 10 cm, or within 5 cm) to, and at least partially sharing an FOV with, the LiDAR system 116 provide image data that corresponds more closely to the LiDAR data (e.g., points) within a point cloud captured contemporaneously with the image data. Accordingly, the image data and LiDAR data may be more easily and accurately fused, to form a fused point cloud having more image accuracy, and with less computing power (e.g., due to less computational burden to interpolate image data to points in point cloud), than a fused point cloud formed using image data from cameras positioned farther away from the LiDAR system. Such benefits are realized even using 2D image data and 3D LiDAR data.

Image data generated with one or more cameras 114 and LiDAR data generated with LiDAR system(s) 116 is of the agricultural environment around the vehicle 100. For example, the image data and the LiDAR data may be of one or more of the ground 102, animals (e.g., livestock, wild animals, domestic animals), humans, crops, crop rows (sprouting, standing, or cut), swaths of crops, undergrowth trees, weeds, other plants, utility lines, bales of crops, rocks, wind turbines, fences and fence posts, shelter belts (lines of trees around a field), agricultural vehicles (e.g., tractors, planters, sprayers, cultivators, combiners, harvesters, mowers, trailers, forager), or other living object or inanimate object that may be proximate the vehicle 100 in an agricultural environment. The one or more cameras and at least one LiDAR system may be positioned and directed to capture image data and LiDAR data of the agricultural environment in front of the vehicle 100 including the ground 102 and any crop rows, undergrowth, weeds, or other agricultural objects in the FOV.

The computing device 118 (also referred to as an "electronic control unit" (ECU), a "system controller," or a "computing unit") may be configured to facilitate one or more control operations (e.g., safety operations, object detection, object avoidance, and remote planning operations) of the vehicle 100 and/or agricultural operation. The computing device 118 may include the imaging controller 120, and at least one additional controller 126. The imaging controller 120 may also be referred to herein as a "vision controller."

While the computing device 118 is illustrated as proximate the engine compartment 108, such as between the engine compartment 108 and the operator cabin 106, in FIG. 1, the disclosure is not so limited. The computing device 118 may be operably coupled to the vehicle 100 at other locations. In some embodiments, the computing device 118 is located inside the operator cabin 106, such as proximate an I/O device 132. In some embodiments, the computing device 118 is located on a device separate from the vehicle 100 (but located within the vehicle 100, such as in the operator cabin 106), such as on a tablet, laptop, or other device.

The vehicle 100 may further include a global navigation satellite system (GNSS) receiver 128, an inertial measurement unit (IMU) 130, the input/output (I/O) device 132, and a global system for mobile communication (GSM) receiver 134. In some embodiments, the I/O device 132 includes a user interface such as a screen. One or more of the GNSS receiver 128, the IMU 130, and the GSM receiver 134 may be located within or operably coupled to the computing device 118. While the GNSS receiver 128, the IMU 130, and the GSM receiver 134 are illustrated on or in the engine compartment 108, the disclosure is not so limited. For example, the IMU 130 may be operably coupled to a chassis 142 of the vehicle 100, and one or both of the GNSS receiver 128 and the GSM receiver 134 may be operably coupled to the vehicle 100 at other locations.

The computing device 118 may be configured to perform or control one or more operations of the vision system(s) 112, the one or more cameras 114, the at least one LiDAR system 116, the imaging controller 120, the additional controller(s) 126, the IMU 130, the GNSS 128, or the GSM 134, as disclosed herein. For example, the computing device 118 may include a processor and a non-transitory memory storage medium having instructions thereon, which when executed by the processor carry out any of the acts, functions, or techniques disclosed herein.

The imaging controller 120 may be operably coupled to the one or more cameras 114 and the at least one LiDAR system 116, to receive image data and LiDAR data, respectively. The imaging controller 120 may be present as software (e.g., machine readable and executable instructions stored on a non-transitory storage medium) within or in remote communication with the computing device 118, hardware (e.g., a processor and memory storage medium configured for performing specified operations) operably coupled to the computing device 118, firmware within the computing device 118, or combinations of any of the foregoing.

The imaging controller 120 is configured to control one or more of actuation of the one or more cameras 114 to capture image data, actuation of the at least one LiDAR to capture LiDAR data, synchronization of actuation of the at least one LiDAR and the one or more cameras 114 to capture the respective data contemporaneously, such as substantially simultaneously. As used herein "contemporaneous" may be within 0.5 s of an event, such as 1 millisecond to 500 milliseconds, 1 ms to 50 ms, 1 ms to 10 ms, 10 ms to 20 ms, 20 ms to 30 ms, 30 ms to 40 ms, or 40 ms to 50 ms, or less than 25 ms of an event (e.g., generation of LiDAR data).

In some embodiments, the imaging controller 120 may include synchronization manager configured to synchronize actuation of the one or more cameras 114 to collect image data; actuation of the at least one LiDAR system 116 to collect image data; recordation of the time of actuation to capture, or receipt of, the image data and the LiDAR data (e.g., time labels) based on a time monitored by the synchronization manager or system clock; recordation of a location of actuation to capture, or receipt of, the image data and the LiDAR data (e.g., location labels) based on location information from the GNSS receiver at the time of the actuation, or combinations of any of the foregoing.

The synchronization manager may receive the image data from each camera 114. In some embodiments, the synchronization manager receives LiDAR data from the at least one LiDAR system 116. The synchronization manager may be configured to synchronize the image data from each camera 114 with image data from other cameras 114, with the LiDAR data or both. For example, in use and operation, the LiDAR system 116 may rotate (e.g., the scanner rotates)) and captures the LiDAR data in a rotating FOV. The synchronization manager may be configured to synchronize the one or more cameras 114 to capture the image data at times corresponding to when the FOV of the LiDAR system 116 is scanning within the FOV of the one or more cameras 114. In embodiments where the frame rate of the cameras 114 is different than (e.g., lower than) the scan rate of the LiDAR system 116, the synchronization manager is configured to interpolate position estimates of pixels (e.g., pixels showing objects) in the image data at times that correspond to the time when the LiDAR system 116 is emitting light (e.g., scanning or flashing) in the FOV of the one or more camera 114. By way of non-limiting example, the synchronization manager may be configured to interpolate the image data from one or more (e.g., each) of the cameras 114 between LiDAR scans in an FOV corresponding to the respective one or more cameras 114 using one or more advanced interpolation techniques, such as optical flow methods (e.g., the Lucas-Kanade method or Gunnar-Farneback) for computer vision, Kalman filtering, or deep neural network-based (DNN-based) trackers. In other words, the synchronization manager may be configured to provide an estimate of the location of each object in the image data at times between image frames of the image data to correspond to the LiDAR data and the scan rate of the LiDAR system 116. Accordingly, the synchronization manager may facilitate use of image data with cameras 114 having a frame rate less than the scan rate of the LiDAR system 116, effectively increasing the frame rate of the cameras 114 to match the scan rate of the LiDAR system 116. Such embodiments may also apply to non-rotating LiDARs, such as when a flash LiDAR has a faster frame rate than the one or more cameras 114.

The synchronization manager is configured to generate synchronized image data. For example, one or more segmentation modules (e.g., object recognition algorithm, segmentation masks, or agricultural object detection neural network) may individually or both receive the synchronized image data of respective cameras 114 and generate respective first labeled image data and second labeled image data with the labels corresponding to the camera from which the image data was captured, the time the image data was captured, the location at which the image data was captured, a correlation to correspondingly captured LiDAR data, or combinations of any of the foregoing. Agricultural object detection neural networks for use in the imaging controller 120 as disclosed herein may be trained with one or more agricultural datasets to identify the one or more agricultural objects, including a crop edge, as explained in more detail below.

Based at least in part on the agricultural objects identified by the imaging controller 120, the agricultural vehicle 100 may be controlled (e.g., autonomously or manually) to selectively interact with the one or more agricultural objects, such as maneuver avoid running over the crops at or inwardly from the crop edge, to harvest a largest volume of a crop along a path, modulate speed to interact with a crop at a selected rate, or the like. For example, the imaging controller 120 may be in operable communication with the at least one additional controller 126 configured to perform one or more control operations of the vehicle 100, such as one or more navigation controls (e.g., control of steering, acceleration, velocity, braking, and/or navigation of the vehicle 100). The imaging controller 120 may be configured to facilitate one or more safe operations of the vehicle 100. For example, the imaging controller 120 may be configured to facilitate object avoidance of, or interaction with, agricultural objects identified based on data from the vision system 112 (e.g., from one or more cameras 114 and the at least one LiDAR system 116), to perform autonomous vehicle operation, to perform a leader-follower operation, to provide a display of the surroundings of the vehicle 100 to the I/O device 132, and to provide analyzed image and LiDAR data (e.g., fused data) to a remote location for remote planning, for example.

The at least one additional controller may be operably coupled to an autonomous control system of the agricultural vehicle 100 to control one or more operations of the agricultural vehicle, such as steering, speed control (e.g., acceleration and breaking), height control, route mapping, display of one or more visual indications of a route or agricultural objects on the I/O device 132, or the like.

The at least one additional controller 126 may be present as software (e.g., machine readable and executable instructions stored on a non-transitory storage medium) within or in remote communication with the computing device 118, hardware (e.g., a processor and memory storage medium configured for performing specified operations) operably coupled to the computing device 118, firmware within the computing device 118, or combinations of any of the foregoing.

The I/O device 132 may include one or more devices configured to receiving a user input (e.g., from an operator) of the vehicle 100 and may include one or more of a keyboard, mouse, microphone, remote control device, button, joystick, trackball, touchpad, lightpen, a speaker, or a display device. The I/O device 132 may be configured to receive a user input from the operator of the vehicle 100 and/or to provide one or more displays to the user.

The GSM receiver 136 may include a digital mobile network and may facilitate digital communications between the vehicle 100 (e.g., the computing device 118, the imaging controller 120, and the at least one additional controller 126).

In some embodiments, an object 140 (which may also be referred to as an "alignment object" or a "reference object") may be located on the vehicle 100 and may include a reference for alignment of data from the one or more cameras 114 and the LiDAR system 116. In some embodiments, the object 140 may be located on the ground 102, fixedly coupled to the vehicle 100 (e.g., on the engine cover) and in the FOV of one or more cameras 114 and at least one LiDAR system 116. The object 140 may be 2-dimensional or 3-dimensional.

As described above, the agricultural vehicle 100 may carry, tow, or otherwise include an agricultural implement 150, such as a sprayer, a fertilizer, a seed planter, a row cleaner, a cultivator, a baler, a swather, a chopper, a harvester, a spreader, a plow, a chisel, or the like. The agricultural implement 150 may include a tow behind implement, an onboard implement, or a self-propelled implement. As depicted in FIG. 1, the agricultural implement 150 may be a harvester having a towing attachment 156 (e.g., tongue and coupler) for operably coupling the agricultural implement 150 to the agricultural vehicle 100. The agricultural implement 150 may include a harvester (e.g., forage harvester, a mower, a chopper, or the like. The agricultural implement 150 may include a tow behind implement, an onboard implement, or a self-propelled implement. The at least one agricultural vehicle 100 may include a tractor, a harvester, such as a forage harvester, combine harvester, a chopper, a mower, or the like.

Embodiments of the agricultural vehicles, systems, and methods herein control one or more operations of the agricultural vehicle 100 based on the locations, dimensions, volumes, and positions of the one or more agricultural objects (e.g., crop edge) identified in the image data, LiDAR data, and fused point cloud(s). Such control includes maneuvering the agricultural vehicle to avoid driving over crops at or behind the crop edge, avoid obstacles in the agricultural environment, to align the agricultural implement with the crop edge or crops therebehind, control a speed of the agricultural vehicle to spray or harvest at a selected rate based on one or more of volume or dimensions of the crop edge or crops therebehind. In embodiments with a self-driven agricultural implement, the agricultural vehicle/implement may be controlled responsive to the image data, the LiDAR data, and the fused point cloud(s), to selectively maneuver wheels of the vehicle, a cultivator, a combine, a mower, a harvester, plow blades, a chisel, or the like with the crops in or behind the crop edge. Various other operations may also be automatically performed with the agricultural vehicle responsive to the image data, LiDAR data, and fused point cloud(s), such as returning a selected point in the agricultural environment to continue an operation (e.g., harvesting) after leaving the agricultural environment.

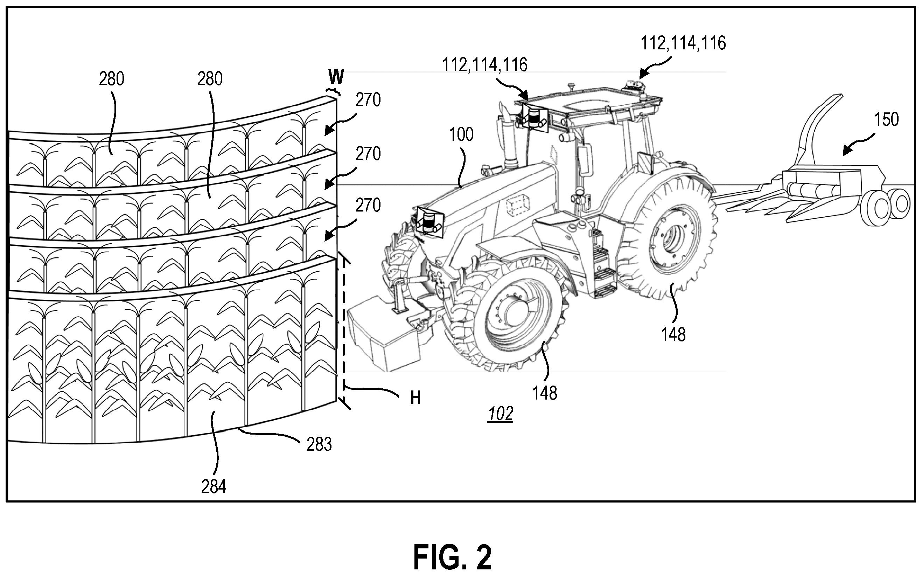

FIG. 2 is a front view of an agricultural vehicle 100 approaching a crop edge 284, according to at least some embodiments of the disclosure. The agricultural vehicle 100 includes the vision system 112 having the one or more cameras 114 and the at least one LiDAR system 116 in a front facing position. The agricultural vehicle 100 is approaching the crops 280 (e.g., agricultural object(s)) on the ground 102 in the agricultural environment. The vision system 112 generates image data and LiDAR data of the agricultural environment and the imaging controller operably coupled thereto processes the image data and LiDAR data to determine a presence, location, dimension(s), volume, route through or around, the one or more agricultural objects. Such a route may include a route to avoid unintentionally driving over the one or more crops 280 (e.g., route to maintain wheels 148 of vehicle 100 outside of crop edge), to harvest, mow, or otherwise interact with a maximum area of crops 280 in a fewest number of passes of an agricultural implement, a route to maintain wheels of the agricultural vehicle outside of the crop edge, or combinations of the foregoing. Crops 280 may include any selected plant species among a plurality of plant species present in an agricultural environment, such as hay, grass, corn, beans, peas, alfalfa, support plants (e.g., clover), or any other plant. It should be understood that crops 280 may include plants that are traditionally not desired, such as weeds or undergrowth, so long as the "crop" is selectively targeted from other plants present in the agricultural environment.

As shown, the image data and LiDAR data may include data about, and be processed to identify, one or more of a right boundary 281 (from the perspective of the agricultural vehicle 100 or a person therein) of at least on crop 280 within the crop edge 284, a boundary of the crops (e.g., any selected plant(s)), a height H of the crops 280, a width W of a crop row, a curvature 283 of the crop edge (in a longitudinal direction), or the ground 102 in the agricultural environment. The image data and LiDAR data may be processed at one or more points along a longitudinal length of crop edge 284 to provide a point cloud of the entire agricultural environment and the above-noted characteristics of the crops in, crop edge 284 along an entire longitudinal length of the crop edge 284 or body of crops 280. Accordingly, the imaging controller can build a route map through the agricultural field utilizing the image data and the LiDAR data obtained from the vision system 112 to avoid one or more objects therein, interact with one or more objects therein along one or more portions of the longitudinal length of the crop edge 284. The crop edge 284 may be an outermost edge of a stand or group of identical plants (e.g., crops). The outermost edge may include an outermost surface of a group of crops or a center point of the outermost crops in a group of crops. The crop edge 284 may be determined by identifying one or more selected plant species (e.g., crops) and positional and dimensional characteristics thereof.

The crops 280 may be spaced from each other by a selected distance, such as a distance wide enough to allow wheels 148 of the agricultural vehicle 100 to travel therethrough without running over the crops 280 adjacent thereto. The space between and/or under the crops 280 may be bare or may be occupied by an unsought plant, such as one or more weeds, undergrowth (e.g., beneficial plant species that do not grow as tall as the crops 280), or undesired crops.

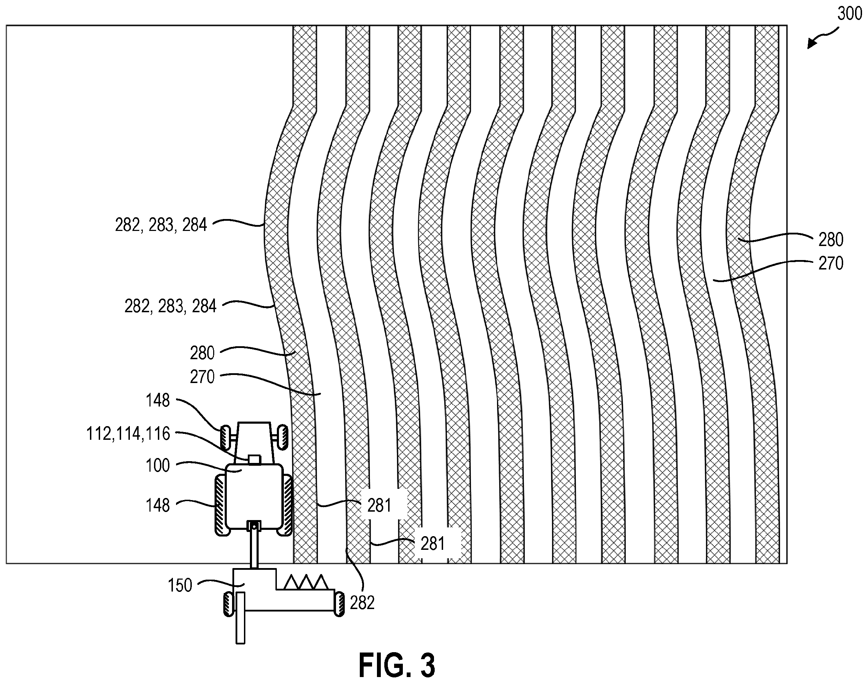

FIG. 3 is an overhead view of an agricultural vehicle 100 in an agricultural environment 300 interacting with the crops 280, according at least some embodiments of the disclosure. As shown, the agricultural vehicle 100 is moving along the ground 102 on wheels 148 in the agricultural environment 300 having crops 280 therein. The agricultural vehicle 100 (and wheels 148) is spatially aligned to drive next to the crops 280 at crop edge 284 without running over the crops 280 by aligning the crop edge 284 with an outermost surface of the wheels 148 of the agricultural vehicle 100 or spacing the crop edge 284 therefrom. Such alignment may include aligning and maintaining the wheels to the crop edge 284. The perspective of FIG. 3 is from the vision system disposed on the roof over the front of the cab of the agricultural vehicle 100. From this perspective the vision system can capture image data for the agricultural field in front of and to the side of the agricultural vehicle 100. The image data captured from the perspective of FIG. 3 can include a height of one or more of the crops 280 relative to the ground 102 laterally proximate to the location of the height measurement. By capturing such height measurements along a longitudinal length of crop edge, any fluctuations in the ground 102 (e.g., rolls, divots, windrows) may be accounted for in volume calculations of the crops 280 at the corresponding longitudinal points of the crop edge. As shown, a right boundary 281 and/or a left boundary 282 of (a crop row of) the crops 280 may be in the image data and LiDAR data. Accordingly, the width of the crops 280 in a crop row at one or more points along a longitudinal length of the crop row or group of crops 280 may be determined as a horizontal mid-point between the respective boundaries. The height measurement of the crops 280 may be taken at the mid-point or at several points between the respective boundaries. As shown a curvature 283 of the crop row or crop edge 284 (e.g., including one or both of the right boundary 281 or left boundary 282) may be visible in the image data and LiDAR data or may be calculated as a selected curvature 283 at one or more sections along a longitudinal length of the crop edge 284 based on one or more of the boundaries. The curvature 283 may be due to contours in the ground, accommodation of structures (e.g., pivot, a building, a road), or natural features (e.g., rocks, hills, river, stream, pond). The height, width, and curvature 283 information may be utilized to calculate a volume of the crops 280 inwardly spaced from the crop edge 284 at one or more longitudinal points or sections thereof.

The crop edge 284 may be determined as an outermost edge of a specific group of crops (e.g., plants), such being inferred from an absence of the specific crops outside an outermost determined plant or group of plants of the specific species. For example, and as shown in FIG. 3, a left boundary 282 of a left most group of crops 280 may be identified as the crop edge 284. In such examples, the curvature 283 of the crop edge 284 may be identified from LiDAR data and image data the as well.

According to one or more of the right boundary, the left boundary, the width, the height, the curvature, spacing, or the volume of the crops(s) 280, the imaging controller or at least one additional controller operably coupled thereto may compute or otherwise select a route around or a route to interact with (e.g., harvest) the crops in or behind the crop edge 284.

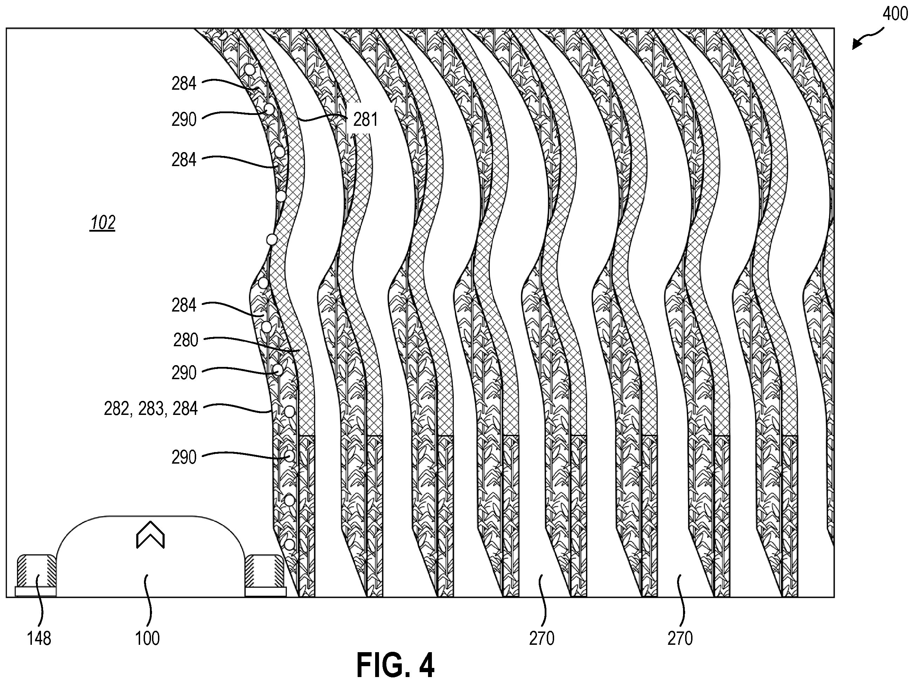

FIG. 4 is perspective views of the agricultural vehicle 100 interacting with crops 280 in the agricultural environment 400, according to at least one embodiment of the disclosure. The perspective of FIG. 4 is from a forward-facing vision system located on the front of the engine cover of the agricultural vehicle 100 and above the header 110.

As shown in FIG. 4, the agricultural vehicle 100 is approaching the crops 280 at the crop edge 284 and the one or more cameras capture image data of the agricultural environment 400 including the crops 280. Additionally, the LiDAR system captures LiDAR data of the agricultural environment 400 with an at least partially overlapping FOV with the one or more cameras. The agricultural environment 400 includes the crops 280 having rows and a crop edge 284 arranged in a curved configuration, through straight crop rows may be present instead or in addition thereto. As the agricultural vehicle 100 approaches the crops 280, the agricultural vehicle (e.g., the computing device, imaging controller, or additional controller(s)) captures LiDAR data of the agricultural environment at least in front of the agricultural vehicle, such as the agricultural vehicle 100 in at least a 30° angle centered on the front of the vehicle 100 (e.g., 15° on both sides of a longitudinal axis of the vehicle 100), such as about 30° to about 270°, about 30° to about 190°, about 30° to about 90°, about 90° to about 190°, about 60° to about 180°, less than about 270°, or less than about 190°. Accordingly, the vision system and imaging controller of the agricultural vehicle 100 can capture and process image data and LiDAR data to provide for selective control of the vehicle 100 based on the image data and LiDAR data of the agricultural environment and one or more objects therein positioned laterally in front of the agricultural vehicle 100. In such embodiments, the imaging controller may be able to identify the right boundary 281, the left boundary 282, the width, the height, the curvature 283, and the volume of the crops 280 in and behind the crop edge 284 at least in front of the vehicle 100 from the image data and the LiDAR data via image processing and fusion as disclosed in more detail herein.

Based at least on one or more of the right boundary 281, the left boundary 282, the width, the height, the curvature 283, or the volume of the crops 280 and/or crop edge 284 at one or more points or sections therealong, the imaging controller may be configured to determine a route or path to interact with the crops 280 and crop edge 284. Such determinations may include identifying one or more key points 290 along the longitudinal length of the crop edge 284 to provide a route including sequential key points 290 in a point-to-point route map of a crop edge 284 (or other agricultural object) in the agricultural environment.

The one or more key points 290 may collectively provide a route to interact with, avoid, or otherwise navigate near the agricultural object(s) (e.g., crop(s) 280 and/or crop edge 284) in the agricultural environment. As shown in FIG. 4, the key points 290 may be determined based on one or more indicia of a location of the crop edge 284, such as left boundary 282 (as shown) or a right boundary 281 of an outermost group of crops 280, a maximum or intermediate height of the crops 280, the curvature 283 of the outermost group crops 280, or the like at one or more discrete points or sections along the longitudinal length of the crops 280. As shown, the key points 290 may be determined at selected points or sections of the longitudinal length of the crop edge 284, such as at least every cm, every 10 cm, every 50 cm, every meter, every two meters, every 5 meters, or every 10 meters, or less than every 10 meters. At such points, the one or more indicia of a location of crop edge 284 may be determined by processing the image data, the LiDAR data, a fused point cloud, or a refined point cloud. The key points 290 may be utilized by the imaging controller or at least one additional controller as points to avoid the crops 280 with the vehicle (but not an implement thereof), points to align the vehicle with (e.g., align the wheels outside of crop edge 284 avoid unintentionally running over the crops with a wheel 148), or points to align an implement (e.g., intake of harvester, mower blades of an agricultural implement) of the vehicle 100 with crops 280 located at and/or within the crop edge 284, such as one or more crop or plant rows spaced inwardly from the crop edge 284.

The key points 290 may be sequentially generated, arranged, or linked by the imaging controller or at least one additional controller to build a route (e.g., route map) for the agricultural vehicle 100 to travel through the agricultural environment 400. Such arrangement of key points 290 may be generated based on one or more of input from an operator through the I/O device, the type of agricultural vehicle, the type of agricultural implement, a selected feed rate of the agricultural implement, or the like. For example, the arrangement may be generated based on a width of a boom of a sprayer on a tow behind sprayer where the boom is longitudinally centered between the wheels of the agricultural vehicle 100 when towed therebehind. In such embodiments, the key points 290 may centered in front of the agricultural vehicle as shown in FIG. 4.

The key points 290 may be generated based on one or more of longitudinal spacing, a volume of one or more sections of the crops 280, a maximum dimension (e.g., height or width) of one or more points or sections of the crops 280 or crop edge, changes in any of the foregoing above or below a threshold value, or any other specific characteristics of the crops 280 or crop edge 284. Accordingly, the image data and LiDAR data may be used to determine and control operation(s) (e.g., steering, speed control) of the agricultural vehicle by the imaging controller and the at least one additional controller.

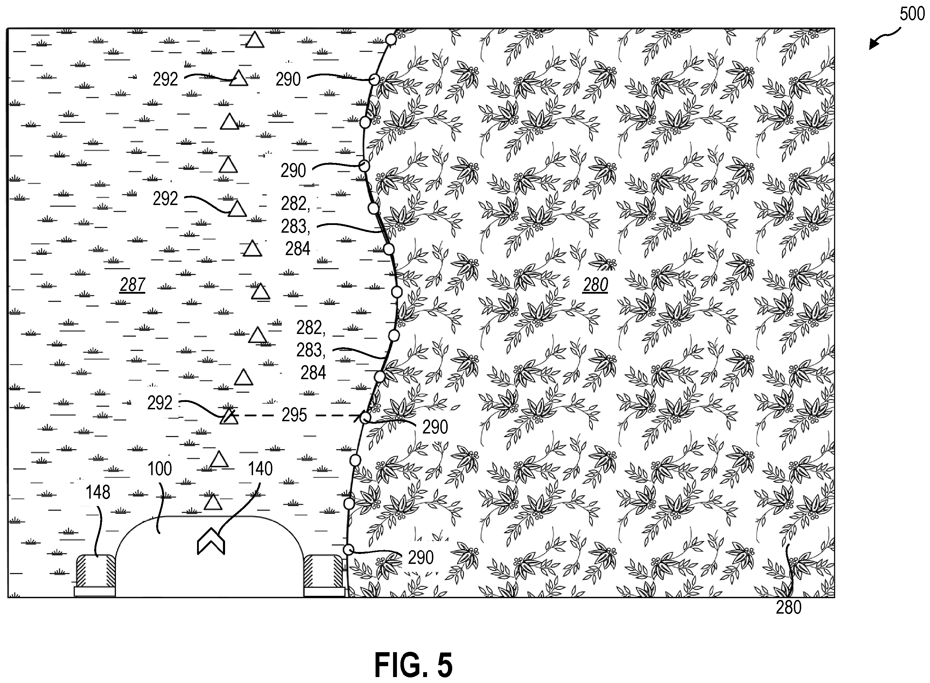

While FIGS. 2-4 depict crops 280 having a relatively large height, in some embodiments, the crops 280 may be relatively short (e.g., less than 25 cm) but nonetheless should be avoided from unintentional interaction with agricultural vehicles and implements, such as when sprouting or with low lying crops. FIG. 5 is perspective view of the agricultural vehicle 100 interacting with crops 280 or crop edge 284 in the agricultural environment 500, according to at least one embodiment of the disclosure. The perspective of FIG. 5 is from a forward-facing vision system located on the front of the engine cover of the agricultural vehicle 100 and above the header 110. The agricultural environment 500 includes low lying crops 280 and unsought plants 287 (e.g., weeds, undergrowth, native plants, or any other plant(s) not selected to be included in the crop 280). In such examples, the vision system and imaging controller may be configured to identify the crops 280 based on one or more of plant type, plant row height, spaces 270 between the crops 280, or the like. For example, the area of the agricultural environment having the unsought plants 287 may include plants that differ from the crops 280, such as having groundcover, weeds, or otherwise undesired plants therein, or may have no plants therein. For example, the image data and the LiDAR data may have image data and LiDAR data indication the species of the plants in the agricultural environment 500 and responsive to input of a selected plant type (e.g., crop 280), the imaging controller may identify and indicate the position of the plant or crop rows containing the selected plant type. Such identification may be based on one or more of color, height, plant structure, or the like. A boundary between the respective unsought plants 287 and crops may be assumed as the crop edge 284.

In some embodiments, the arrangement of key points 290 may be based on an agricultural implement (e.g., harvester, mower, sprayer) having an outermost nozzle, outermost drill, outermost pick-up or intake, offset from a center of a longitudinal axis of the agricultural vehicle 100. For example, an intake of an agricultural implement offset to the left or right of the leftmost or rightmost tires on the agricultural vehicle 100 may be used to perform one or more operations on the crops 280, such as harvesting, spraying, mowing, or the like. In such embodiments, the key points 290 may be automatically offset from the crop edge 284, at points or sections along the longitudinal length of the crop edge 284 by the imaging controller or the at least one additional controller. The offset key points 292 may be utilized as key points for the route map. The offset may be a distance between a center of the agricultural vehicle and the wheel 148, outermost intake, mower blade, or the like of the agricultural vehicle or implement. In such embodiments, the offset key points 292 are based on the key points 290. Accordingly, the offset locates (e.g., centers) the wheel outside of the crop edge 284 sufficient to locate an implement in a position to interact with the crops 280. The offset may position and maintain the wheels 148 outside of the crop edge 284 and the implement within the crop edge 284.

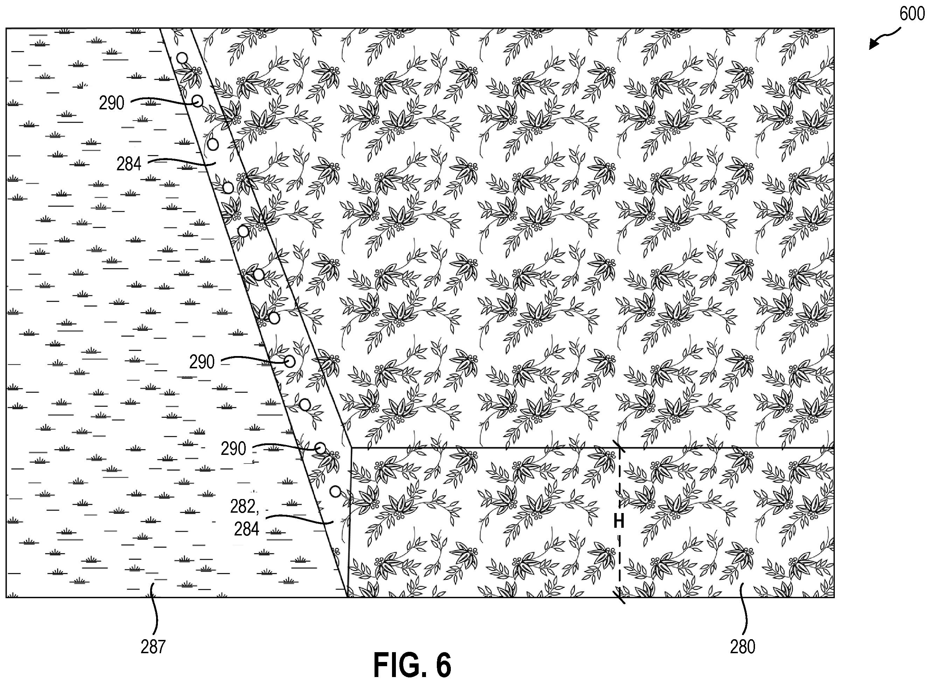

FIG. 6 is a close-up perspective view of a crop edge 284, according to at least one embodiment of the disclosure. As shown, a height of the crops 280 may be relatively close to (or even less than) a height of unsought plants 287 in the agricultural environment. The unsought plants 287 may include one or more of ground cover (e.g., native vegetation), weeds, unwanted crops, or any other plants that are not intended to part of the crops 280 in the agricultural environment. The crops 280 and the unsought plants 287 may differ in one or more of height, color, structure (e.g., leaves, stalks, chutes, stems), distribution, or any other characteristic. Accordingly, the imaging controller may be configured to distinguish between the crops 280 and the unsought plants 287. Differentiation of the crops 280 and the unsought plants 287 allows for determination of the crop edge 284 between the crops 280 and unsought plants 287 as disclosed herein. The outermost boundary (e.g., left or right boundary) of an outermost edge of the crops 280, may be determined as being at the transition between plant types.

The image data and LiDAR data collected by the vision system and imaging controller may be processed according to one or more algorithms to identify one or more agricultural objects (e.g., crops) and the ground in the agricultural environment. Such image data and LiDAR data may be used to classify (e.g., segment) image data, generate point clouds, generate fused point clouds, and generate refined point clouds to identify the presence, location, position, and size characteristics of the one or more agricultural objects in the agricultural environment.

Object detection algorithms are used to identify and classify objects in the images and LiDAR data, including agricultural objects. These algorithms may use machine learning techniques to learn the appearance of distinct types of agricultural objects from training data and can then detect and classify these agricultural objects in image data of new images. There are many different approaches to object detection, including methods based on convolutional neural networks (CNNs) and region-based methods such as Fast R-CNN and Single Shot Detector (SSD). Semantic segmentation algorithms can be used to classify each pixel in the image into a predefined set of classes, including classes for different agricultural objects (e.g., plants, landscape structures, vehicles, rocks, animals). Semantic segmentation algorithms can provide detailed and precise information about the shape and location of agricultural objects in the image data but may be more computationally expensive to run.

The vehicles, systems, and methods disclosed herein utilize various algorithms for agricultural object detection in the image data and LiDAR data of the agricultural environment.

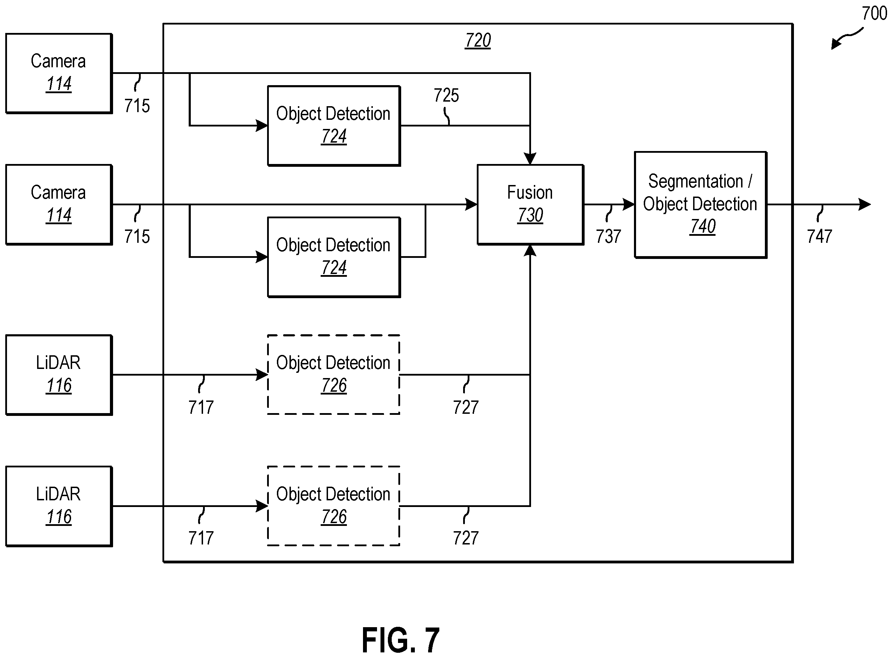

FIG. 7 is a schematic of an algorithm 700 to identify one or more agricultural objects based on image data and LiDAR data, according to at least one embodiment of the disclosure. The algorithm 700 may be performed by the computing device, such as by an imaging controller 720 therein. The imaging controller 720 may be similar or identical to the imaging controller 120 in one or more aspects. The one or more cameras 114 and the at least one LiDAR system 116 may be operably coupled to the imaging controller 720 (or computing device including the imaging controller 720).

The algorithm 700 includes receiving image data 715 from one or more cameras 114, such as responsive to instructions from the imaging controller 720 to capture image data. The algorithm 700 includes receiving LiDAR data 717 from the at least one LiDAR system 116, such as responsive to instructions from the imaging controller 720 to capture LiDAR data 717. One or both of capture or receipt of the image data 715 and LiDAR data 717 may be carried out contemporaneously. In such embodiments, the instructions to capture (e.g., generate) image data 715 and LiDAR data 717 may be responsive to a global position of an agricultural vehicle or responsive to a (pulse) signal from a global navigation satellite system (GNSS) operably connected to the vehicle. In some embodiments, the imaging controller 720 may be configured to log global position data of the agricultural vehicle (e.g., from the GNSS), receive a pulse signal from the GNSS or generate a pulse signal responsive to positional information relayed by the GNSS, cause the at least one LiDAR system 116 to capture the LiDAR data 717 based on the pulse signal and cause the one or more cameras 114 to capture the image data based on the pulse signal contemporaneously with causing the at least one LiDAR system to capture the LiDAR data based on the pulse signal. In such embodiments the metadata of the LiDAR data 717 and the image data 715 may include positional and directional information of the agricultural vehicle. Such information provides more accuracy to the resulting point clouds, fused point clouds, and refined point clouds, including any information on agricultural objects therein.

The image data 715 may be processed to classify one or more objects therein. For example, the algorithm 700 may include processing the image data to classify pixels therein and identify one or more agricultural objects therein, including crops or a crop edge, at block 724. Such classification may be performed segmentation operations using one or more of instance masks, segmentation masks for specific classes, semantic segmentation, panoptic segmentation with a list of classes, box-based segmentation, or the like. The masks may include masks specifically constructed to segment agricultural objects, the ground, vehicles, any other object in the agricultural area, or characteristics thereof.

In some embodiments, the object segmentation operation is instance segmentation, wherein instances of objects (whether or not the type of object is the same as another identified object) are provided with a unique label (e.g., identifier, tag) (also referred to as an "object label"). In some such embodiments, the labeled image data (e.g., pixels) may include labeled agricultural objects. In some embodiments, the labeled image data includes segmented image data. Pixels defining the labeled objects may include metadata including the image data (e.g., RGB image data, SWIR image data, LWIR image data, a timestamp, an object label, and an instance label).

The imaging controller 720 may be configured to perform one or more (agricultural object) identification or segmentation operations on the image data 715, to identify agricultural objects, such as using an object detection deep neural network trained with an agricultural dataset to identify the one or more agricultural objects therein. In some embodiments, the deep neural network (DNN) may be used to classify the image data 715 (e.g., identify and classify pixels having one or more agricultural objects therein), at block 724. The classification may include segmentation or any other object recognition technique. The DNN may include an agricultural object DNN, such as a deep convolutional neural network. The neural network may include one or more object detection algorithms, object tracking algorithms, and/or object detection and tracking algorithms, such as one or more of YOLOv3, YOLOv5, YOLOv8, Faster R-CNN, Simple Online and Realtime Tracking (SORT), DeepSORT, FairMOT, TransMOT, ByteTrack, or another object detection and object tracking neural network. The agricultural object DNN may include one or more other object detection and tracking algorithms and/or separate algorithms for object detection and object tracking. In some embodiments, the agricultural object DNN generates a bounding box around the detected objects and classifies one or more (e.g., each) agricultural objects in labeled image data, such as a label indicating the labeled image data (e.g., pixel) includes at least a portion of an agricultural object (e.g., crop edge) therein.

The agricultural dataset may include image data including ground truth data with respect to agricultural objects and/or animals that may be encountered in a field during performance of one or more agricultural operations (e.g., during one or more of baling, planting, spraying, spreading, harvesting, cutting, swathing, tilling). The agricultural objects may include moving objects (e.g., one or more a tractor, implement (tillage implement), combine, forager, combine header, combine trailer, forage header, front loader, planter and seeder, harrow, plough, swather, tedder, rake, mower, fertilizer spreader, sprayer, row cleaner, cultivation tool, potato digger), a static object (a square bale, a round bale), crop structures (e.g., a stack of crops, standing crops (e.g., crop edges)), weeds, undergrowth, a shelterbelt, a pole (e.g., a fence pole, a utility pole, an electric pole) a wind turbine, a rock (e.g., a boulder, a stone), vegetation (e.g., trees, weeds, bushes, crops), and a building (e.g., farm, house, barn, shed, silo)). The objects may include be living objects, such as humans (e.g., adult, infant, toddler, child, adolescent, adult), plants, and animals (e.g., fawn, bird, cat, dog, cow, sheep, horse, fox, rabbit, deer, pig, goat). The agricultural dataset may include ground truth for classifying each of the agricultural objects, whether moving, static, and/or living. For example, the agricultural dataset may include image data and ground truths for classifying standing crops, harvested crops, undergrowth, weeds, trees, and shrubbery. The ground truths may include data for classifying plant species based on size, foliage, color, structure, position, or the like. The ground truths may include ground truth data for identifying a structure of, boundaries of, or type of (e.g., plant type) of an agricultural object based on one or more of dimension(s) (e.g., curvature, height, width, volume), material type (e.g., plant), color, material shape or structure (e.g., stalks, chutes, stubble, leaves, blades), pattern in the agricultural environment (e.g., swaths, crop edge, stubble, wind rows), or any other characteristic.

In addition, the agricultural dataset may include training data and associations for agricultural objects. The first agricultural dataset may include associations of object dimensions, orientations, volumes, locations, object type (e.g., plant or animal species) with known or assumed plants, structures, animals, equipment, or any other agricultural objects. The first agricultural dataset may include associations between towed implements (e.g., planters, tillage implements) and self-propelled vehicles (e.g., a tractor) that tow the towed implements; animals and associated movements, poses, and speeds; whether one object is trailing another, such as in a leader-follower arrangement, and trajectories conventionally encountered by the agricultural objects.

The agricultural object DNN may be trained with an agricultural data set that is different from the first agricultural data set, such as an agricultural data set directed to plant types, structure types (e.g., swath, crop edge, field edge, shelter belt), or other ground truth agricultural object data that differs from the ground truth agricultural object data of the first agricultural object DNN. For example, the first agricultural data set may include ground truth data related to plant types and the second agricultural data set may include ground truths related to animal or agricultural machine types.

At block 724 the algorithm 700 may differentiate between (e.g., segment) and classify (e.g., label) pixels in the image data as crop edge material, the ground, stubble, undergrowth, or weeds using an agricultural object DNN trained with training data having ground truth data for each of the crop edge material, the ground, stubble, undergrowth, and weeds. At block 724 the algorithm 700 may differentiate between and classify pixels in the image data as a plant of interest (e.g., plant type in crop edge), support plants (e.g., red green clover), undergrowth, harmful weeds (e.g., thistles, rumex, asteraceae), or the ground, using an agricultural object DNN trained with training data having ground truth data for each of the grass, support plants, harmful weeds, or the ground. Similar classifications may be performed for one or more selected plants, such as grass, hay, wheat, barley, oats, alfalfa, peas, soybean, triticale, or any other crop. For example, at block 724, the algorithm 700 may differentiate between and classify pixels in the image data as small grain plants (e.g., wheat), the ground, undergrowth, or weeds (e.g., harmful weeds) using an agricultural object DNN trained with training data having ground truth data for each of the small grain plants, the ground, and weeds. In some examples, at block 724 the algorithm 700 may differentiate between and classify pixels in the image data as a structure of an agricultural object, such as crop structure (e.g., plant type, swath(s), plant row, crop edge, wind row, bale); the ground; or weeds using an agricultural object DNN trained with training data having ground truth data for each of the structure of an agricultural object, the ground, or weeds. AS noted above, the agricultural object DNN may include ground truth data for a plurality of classifications, such as plant types, agricultural object structures, the ground, weeds, stubble, or the like. According, the agricultural object DNN may identify a presence and location of one or more pixels in the image data having an agricultural object (e.g., crop edge) therein. Such identification may be noted for each pixel with a label as disclosed herein. For example, the label may indicate one or more of the agricultural object type, the agricultural object location, the time of capturing the image data, the location of capturing the image data, or any other information useful for further processing the image data and pixels. Such labels may be in the meta data of the image data (e.g., for each pixel).

In some embodiments, one or more agricultural object DNNs may be trained with image data containing ground truth data for a specific spectral region such as monochrome, RGB, infrared, ultraviolet, or any other wavelength of light. Accordingly, processing the image data to classify pixels therein and identify one or more agricultural objects therein, including at crop edges, may be carried out using image data from any number of camera types and image data types.

In embodiments where at least a portion of the FOV of a camera 114 overlaps with at least a portion of the FOV of another camera 114, the imaging controller 720 is configured to identify pixels in the overlapping regions of the FOVs having a greater resolution (e.g., a greater pixel density). In such embodiments, the labeled image data output from processing the image data may include, in the metadata associated with each pixel thereof, an indication of which pixels are prioritized for fusion and/or which pixels should be fused to the point cloud data. In such embodiments, the imaging controller 720 may be configured to prioritize pixels of image data in the labeled image data for overlapping FOVs in the image data based on the resolution of such image data.

The block 724 of processing (e.g., classifying) the image data 715 may be carried out in parallel processing acts for the image data from each camera 114, or a single processing act for the image data 715 of all cameras 114. The act of classifying the image data at block 724 outputs classified image data (e.g., classified pixel data). The classified pixel data and/or the raw image data may be fused onto the point-cloud built from the LiDAR data.

As shown in FIG. 7, the LiDAR data 717 may be received at the imaging controller 720 from the at least one LiDAR system 116, such as responsive to a capture signal from the imaging controller 720 to the LiDAR system 116 to capture the LiDAR data 717. One or both of raw LiDAR data or a point cloud built with the LiDAR data 717 may be provided to the imaging controller 720. The LiDAR data 717 may be used to generate a point cloud by the imaging controller 720 or the LiDAR system 116. The LiDAR data 717 may include data indicating a position in 3D space of objects (e.g., points on objects) relative to other objects in the 3D space based on the received laser light reflected therefrom.

The LiDAR data 717 includes LiDAR data collected at a plurality of instances spaced from each other by one or more durations, such as any of the durations disclosed herein. The LiDAR data 717 at one or more instances may be merged to give a merged point cloud having LiDAR data taken at multiple instances and multiple locations to provide a more detailed and accurate (e.g., due to overlapping LiDAR data) point cloud of the agricultural environment including any agricultural objects such as crop edges therein. The LiDAR data 717 at one or more instances may correspond to image data 715 collected at the one or more instances with an at least partially overlapping FOV. Accordingly, the LiDAR data 717 can be fused with the corresponding image data 715 to generate one or more fused point clouds having the image data fused to corresponding points within the point cloud.

In some examples, the algorithm 700 may include processing the LiDAR data to identify one or more agricultural objects therein at block 726. The block 726 may represent a LiDAR object detection neural network configured analyze the LiDAR data 717 (e.g., a point cloud) to identify agricultural objects therein. Such identification may include generating labeled LiDAR data 727 having labels indicating one or more of information, elevational information, azimuth information, RGB data, an agricultural object label, a timestamp, or the like. For example, the labeled LiDAR 727 data may include labeled agricultural objects, such as instances including at crop edges or portions thereof. In some embodiments, the labeled LiDAR data 727 includes a labeled 3D LiDAR point cloud. Each voxel in the labeled 3D LiDAR point cloud may include metadata including one or more of (e.g., each of) depth (e.g., distance) information, elevational information, azimuth information, RGB data, an agricultural object label, a timestamp, or the like. IN some examples, the block 726 may not be present in the algorithm 700.

The imaging controller 720 may include a LiDAR object detection neural network configured to receive the LiDAR data 717 from the LiDAR system 116. The LiDAR object detection neural network may be trained with a LiDAR agricultural dataset, which may include LiDAR data having ground truth data with respect to agricultural objects that may be encountered in the agricultural environment during performance of one or more agricultural operations. The LiDAR agricultural dataset may include ground truth data for classifying each of the agricultural objects, whether moving, static, and/or living. Such LiDAR data and ground truth data may be similar or equivalent to the image data and ground truth data for the agricultural object DNN used to process image data as described herein. For example, the LiDAR agricultural data set may include LiDAR data (e.g., voxels) including ground truth data of one or more agricultural objects such as plant species, plant types (e.g., grasses, shrubs, trees), plant structures (e.g., stubble, swaths, bales, crop edges, cut crops), vehicles, animals, or the like. In some embodiments, the LiDAR agricultural dataset includes training data and associations for the agricultural objects, as described above with reference to the agricultural datasets in the agricultural object DNN used to process image data described above.

The LiDAR object detection neural network may include a DNN, such as a deep convolutional neural network, one or more neural networks configured to perform one or more of object detection, object tracking, and object segmentation on the LiDAR data 717. By way of non-limiting example, the LiDAR object detection neural network may include one or more of Complex-YOLO, YOLO3D, 3DFCN, HVNet, and VoxelNet. The LiDAR object detection neural network 530 may include one or more other machine learning models. The LiDAR object detection DNN may be also referred to as a "point cloud DNN."

The LiDAR object detection neural network may analyze the LiDAR data 717 at block 726 and generate labeled LiDAR data 727. For example, the LiDAR object detection neural network is configured to perform an object segmentation operation on the LiDAR data 717, such as an instance segmentation, semantic segmentation, or panoptic segmentation operation to produce the labeled LiDAR data 727 (e.g., labeled point cloud). In some embodiments, the labeled LiDAR data 727 includes labeled objects, such as instances of objects. In some embodiments, the labeled LiDAR data 727 includes a labeled point cloud (e.g., labeled 3D LiDAR point cloud). Each voxel in the labeled 3D LiDAR point cloud may include metadata including one or more of depth (e.g., distance) information, elevational information, azimuth information, RGB data, an object label, or a timestamp.

Generally, image data may be fused to the point cloud to generate a fused point cloud having the image data fused to corresponding points within the point cloud. For example, the image data 715 (e.g., raw image data, image metadata, classified image data (e.g., pixels)) may be fused to the LiDAR data 717 or 727 (e.g., point cloud, labeled LiDAR data, labeled point cloud), at block 730 of the algorithm. For example, the act of fusing the data may include fusing image data 715 or labeled image data 725 to the point cloud (e.g., LiDAR data 717 or 727) to generate fused data 737 and a fused point cloud having image data (715, 725, or both) mapped to corresponding points within the point cloud (e.g., corresponding voxels within a 3D point cloud). The fusion may be executed by a fusion manager (e.g., machine readable and executable instructions) stored in the imaging controller 720.

The image data (715, 725, or both) may be fused with the LiDAR data 717 or 727 at block 724. The imaging controller 720 may be configured to receive the image data (e.g., image data 715 labeled image data 725) and the LiDAR data (717, 727, or both), and to perform one or more fusion operations on the data to generate fused (point cloud) data 737 and a fused point cloud generated therewith. The fused data 737 may include image data (e.g., pixels and metadata thereof) mapped to corresponding points (e.g., voxels) within the point cloud. For example, in embodiments where the LiDAR data 717 and the image data 715 are acquired contemporaneously at a plurality of instances (e.g., LiDAR data generated at a plurality of instances and corresponding image data generated at the plurality of instances or contemporaneously therewith), the imaging controller 720 may be configured to fuse the image data (715, 725, or both) and the LiDAR data 717 (e.g., point cloud) generated at the corresponding instances to generate the fused point cloud having the image data mapped to LiDAR data (e.g., points in the point cloud) of the corresponding instances. Such a fusion operation may provide a snapshot of the agricultural environment at a given time and location. A plurality of these snapshots including the image data and LiDAR data may be fused to provide a more accurate and detailed point cloud (e.g., fused point cloud or refined point cloud) of the agricultural environment and any agricultural objects therein.

In some embodiments, output from object detection on the image data 715 or 727 (e.g., by a DNN), whether it is performing semantic or panoptic segmentation, is typically an image-like structure where each pixel is represented by multiple channels. These channels provide a comprehensive set of information that can be used for fusion with other data types like point clouds from LiDAR data. The detailed composition of these channels may include original image channels (e.g., monochrome (mono), RGB values, NIR, SWIR, or the like) can be included, providing a richer set of data from the original image data. The channels may include class information such as each pixel may have a channel representing the class of an object it belongs to. This class may be encoded as an integer ranging within a predefined set of classes that the DNN has been trained to recognize. The channels may include instance Information if the DNN is capable of instance segmentation and another channel will represent the specific instance of the object class detected. This allows differentiation between multiple objects of the same class within the image data. The channels may include probability/certainty estimates for each class. The channels may include metadata for each pixel or voxel. Such metadata may include labels as disclosed herein, such as growth stage of a plant, type of structure of a plant (e.g., crop edge, stubble, mowed), data types (e.g., 8-bit, 16-bit, 32-bit, either signed or unsigned), or the like. This structured output from the object identification operation (e.g., DNN) allows for detailed and flexible integration into the fusion process, simplifying the ability to merge and utilize multimodal data effectively for advanced applications.

The fused (point cloud) data 737 includes the image data 715 and/or 725, projected onto the LiDAR data 717 and/or 725 and the imaging controller is configured to project the image data to a 3D space on the LiDAR data (e.g., point cloud) to generate fused data 737 (e.g., the fused point cloud). By way of non-limiting example, bounding boxes of identified (and labeled) agricultural objects in the image data 715 and/or 725 may be projected (e.g., the corners of the bounding boxes may be projected) to obtain points in 3D space (referred to as "back projection") which define the vertices of a 3D frustum in the 3D (real world) coordinate system, corresponding to the LiDAR data 717 or 727. In some embodiments, the 3D frustum may be defined based on the camera 114 parameters (e.g., the intrinsic and extrinsic parameters (e.g., the rotation and translation between the camera 114 and the world coordinates)). Each frustum corresponds to an object detected in the image data 715 and/or 725. The points inside each frustum may be analyzed to create smaller pieces of the point cloud, each piece containing 3D points corresponding to an agricultural object detected in the 2D image. However, the disclosure is not so limited and the image data 715 and/or 725 may be transposed to the 3D space of the LiDAR data 717 or 727 (e.g., point cloud) by other methods.

The imaging controller 720 (or fusion manager associated therewith) is configured to perform one or more fusion operations on the image data 715 and/or 725 and the LiDAR data 717 and/or 727 to generate the fused data 737. For example, the imaging controller 720 may be configured to perform one or more of a Hungarian algorithm (also referred to as "Kuhns-Munkres algorithm" and implementing bipartite graph theory), a Bayesian estimation (Bayesian analysis (e.g., Bayes' theorem)) for sensor fusion, a Kalman filter, and Bipartite Graph Matching operation to match the LiDAR data (e.g., LiDAR data 717, labeled LiDAR data 727) with the image data (e.g., image data 715, labeled image data 725). The imaging controller 720 (e.g., fusion manager therein) may perform the fusion operation by other methods to generate the fused data (e.g., fused point cloud) (may be referred to as "fused point cloud data").

In some examples, at block 730, the imaging controller 720 (e.g., fusion manager associated therewith) may be configured to project the LiDAR data 717 and/or 727 onto the image data (e.g., image data 715 and/or labeled image data 725), such that the fused data 737 resulting therefrom includes the image data 715 and/or 725 and the LiDAR data 717 and/or 725 in 2D space. In other words, in some such embodiments, the fusion of the LiDAR data and the image data occurs in 2D and LiDAR data is transposed into 2D space with the image data and points in the LiDAR data (e.g., points in point cloud) are matched to bounding boxes of objects (e.g., instances of objects labeled with the agricultural object detection neural network) in the image data. In some embodiments, the labeled LiDAR data 727 includes more sparse data compared to the image data 715, 725. Since the data fusion occurs in 2D, the data fusion may use less processing power and may process the data faster compared to other embodiments. By way of comparison, performing object detection on the LiDAR data in 3D and labelling the LiDAR data 717 rather than the labeled image data 725 (in 2D) may utilize more processing power compared to labeling the image data 715 or 725 in 2D.

Projecting the LiDAR data 717 or 727 onto the image data 715 or 725 may include formatting and aligning LiDAR data with the image data, such as by aligning the timestamps of the LiDAR data 717 or 727 and image data 715 or 725; transforming the 3D coordinates of the LiDAR data 717 or 727 to 2D using, for example, a projection matrix to map the 3D points onto a 2D plane (e.g., such as perspective projection or orthographic projection); and applying the projection matrix to each point in the 3D LiDAR data (e.g., point cloud, fused point cloud). The LiDAR data 717 or 727 may be projected onto the image data 715 or 725 with one or more fusion operations (e.g., fusion algorithms), such as MV3D, AVOD, voxels such as VoxelNet, F-PointNet, MVFP, and raw point clouds such as PointNet, PointNet++, and PonitRCNN to convert the 3D data of the LiDAR data 717 or 727 to a 2D plane representation, such as a range view, spherical view, cylindrical view, or a bird's-eye view (BEV) projection techniques.

In some embodiments, the fused data 737 that forms the fused point cloud includes the metadata of one or more of the image data 715 or 725 or the LiDAR data 717 or 727. By way of non-limiting example, the fused data may include pixels and each pixel of the fused data may include one or more of (e.g., each of) RGB image data, SWIR image data, LWIR image data, a flag if pixels data from different cameras do not agree, priority data for pixels within overlapping fields of view of the image data, depth (e.g., distance) data, elevational data, azimuth data, an agricultural object label (e.g., an instance label), and meta data (e.g., object association data, location data, data with respect to which of multiple cameras the image data for each pixel is based, flags for image data that does not match image data of another camera, and a timestamp).

In some embodiments, the fused data 737 includes and corresponds to pixels of agricultural objects in the image data 715 or 725 and the LiDAR data 717 or 727. In other words, pixels that do not include an agricultural object classification (e.g., an instance) are not included in the fused data of the fused point cloud. Stated another way, pixels of the background (not including agricultural objects or the ground) may be disregarded and may not be included in the fused data.

After generating the fused data, the imaging controller 720 may segment the fused data 737 (e.g., fused point cloud) to refine positional information and dimensional information of the one or more agricultural objects within the fused point cloud to generate refined data 747 and a refined point cloud at block 740. Such a segmentation may include any of the segmentation techniques disclosed herein on the fused data 737 (e.g., fused point cloud) including any portions thereof, such as image data 715, 725 (including metadata associated therewith) and LiDAR data 717 and 727 (including metadata associated therewith). Such refinements may be accomplished using the segmentation techniques on the fused data 737 (including the image data 715 and/or 725 and LiDAR data 717 or 727 therein). Such segmentation may provide refined data 747, such as a refined point cloud, having more accurate positional and dimensional information of the one or more agricultural objects therein than the fused data 737 (e.g., fused point cloud).

It should be understood that the fusion at block 730 may be performed to fuse one or more of the image data 715 or the labeled image data 725 in combination with one or more of the LiDAR data 717 or the labeled LiDAR data 727. For example, the algorithm 700 may be modified to exclude the block 726, whereby the fusion is performed to fuse one or both of the image data 715 or 725 in combination with the LiDAR data 717. In a simplest embodiment, the algorithm 700 may include fusing only the image data 715 to the LiDAR data 717, where both blocks 724 and 726 are excluded. In such examples, block 740 may be performed to generate the refined data 747 including labels (e.g., timestamps, pixels, RGB data, or agricultural object labels from the segmentation at block 740, or any other labels). In such examples, a LiDAR (agricultural) object detection neural network may be utilized to generate labeled and fused LiDAR data (e.g., a fused point cloud having labels of the pixels and/or voxels therein). The labels in the labeled and fused LiDAR data may be similar or identical any of the labels disclosed herein, in one or more aspects, such as including timestamps, agricultural object labels, or the like. In such examples, the labeled and fused data may be fused again with the original LiDAR data 717 to generate twice fused data (e.g., a twice fused point cloud having only image object detection performed thereon). In such examples, the twice fused point cloud may be further processed at block 740 to perform one or more object detection algorithms thereon, such as segmentations as disclosed herein (e.g., instance masks, agricultural object DNN, or the like) to output the refined data 747 (e.g., refined point cloud).

The imaging controller 720 may be configured (e.g., include machine readable and executable instructions thereon) to identify characteristics (e.g., positional, dimensional, species) of the at least one agricultural object. For example, the imaging controller 720 may be configured to identify a left boundary of the crop edge, a right boundary of the crop edge, a curvature of the crop edge, a volume of the crops in or behind the crop edge (e.g., in one or more sections), a longitudinal direction of the crop edge or crops therein, or the like based on one or more of the image data, the LiDAR data (e.g., 2D or 3D point cloud), the fused data (e.g., fused point cloud), or the refined data (e.g., refined point cloud). Such identification may be performed using any of the segmentation, fusion, DNN, or other object detection operations disclosed herein. For example, the curvature may be determined based on a RANSAC algorithm trained with ground truth data including curvature or other appearances of crop edges.

The imaging controller 720 may be configured to segment the fused point cloud to differentiate between the crops in the crop edge and ground therebeneath. In such examples, the imaging controller 720 may be configured to generate volume estimates for sections of the crops in or behind the crop edge from one or more of a surface curvature of the crop edge above the ground or information about material types of the crop edge. In some examples, the information about material types in crop edge includes classified pixels from the image data identifying one or more plants species within the crop edge. Such material type data may be utilized by the imaging controller to infer, calculate, or estimate a density of the material in the crop(s). For example, grass may have a greater density than hay. Such information may be utilized control a speed or route of the agricultural vehicle to promote complete interaction (e.g., mowing) of the crop(s) in the crop edge.

In some examples, the imaging controller 720 includes instructions thereon that cause the imaging controller to segment the fused point cloud to differentiate between agricultural object structures or object types, such as differentiate between the crops (e.g., plants) or crop edge and one or more unsought plants (e.g., stubble, groundcover, or weeds) in proximity to the crop edge. Accordingly, the crop edge may be more closely defined even when located among other vegetation.

Various algorithms may be utilized to perform object detection operations (e.g., classification techniques, segmentation techniques, agricultural object detection DNNs) on the image data and LiDAR data to provide accurate representations of agricultural objects in the agricultural environment, including positional, spatial, and dimensional information about the agricultural object(s), such as a crop edge of selected crops in a field. Such representations may differentiate between unharvested crops (e.g., standing crops) and harvested crops (e.g., stubble), or any other characteristics for differentiating between objects.

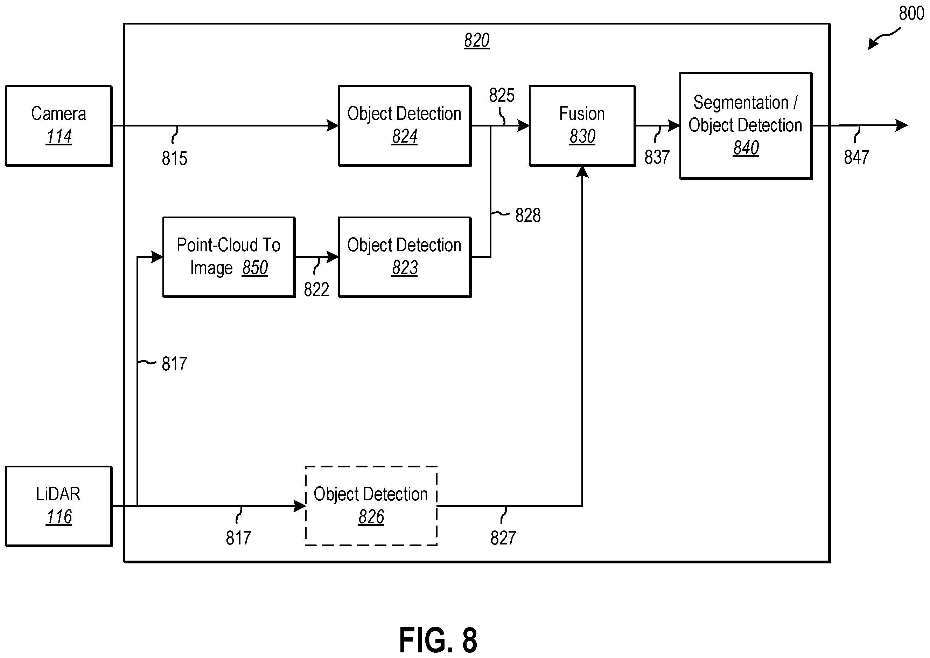

FIG. 8 is a schematic of an algorithm 800 to identify one or more agricultural objects based on image data and LiDAR data, according to at least one embodiment of the disclosure. The algorithm 800 may be performed by the computing device, such as by an imaging controller 820 therein. The imaging controller 820 may be similar or identical to the imaging controller 120 or 720 in one or more aspects. The one or more cameras 114 and the at least one LiDAR system 116 may be operably coupled to the imaging controller 820 (or computing device including the imaging controller 820).

The algorithm 800 includes receiving the image data 815 from the one or more cameras 114 and receiving the LiDAR data 817 from the one or more LiDAR systems 116 operably coupled to the imaging controller 820. The algorithm 800 includes performing object detection on the image data 815 at block 824. The object detection may be similar or identical object detection performed on image data disclosed herein, such as with segmentation masks, an agricultural object DNN, or the like to produce labeled image data 825.

The algorithm 800 includes receiving the LiDAR data as a point cloud or generating a point cloud therefrom. The LiDAR data 817 may be processed to identify one or more agricultural objects therein at block 826 to generate labeled LiDAR data 827 (e.g., a labeled point cloud) as disclosed herein with respect to the algorithm 700. At block 850, the LiDAR data 817 may also be processed with a point cloud-to-image conversion operation to translate the 3D point cloud to a 2D representation (or plurality thereof) of the LiDAR data 817 to generate 2D LiDAR data 822, including labels for spatial data (e.g., depth) for the pixels of the 2D representation. The 2D LiDAR data 822 may be processed with one or more object identifier operations (as disclosed herein for image data or LiDAR data) to identify agricultural objects therein and produce labeled 2D LiDAR data 828 at block 823. The labeled 2D LiDAR data 828, the labeled image data 825, and labeled LiDAR data 827 may be fused at block 830 to generate fused data 837 (e.g., a fused point cloud), such as using any of the fusion operations or techniques disclosed herein. With 3 different streams of data, the fusion at block 830 may include prioritizing data that agrees with other data, eliminating or minimizing data that does not agree with a majority of the data. Accordingly, the three streams of data (825, 827, and 828) may provide for greater object identification and characterization accuracy than only two streams of data.

After generating the fused data 837, the imaging controller 820 may segment the fused data 837 (e.g., fused point cloud) to refine positional information and dimensional information of the one or more agricultural objects within the fused point cloud to generate refined data 847 and a refined point cloud at block 840. The fused data 837 may be segmented using any of the segmentation techniques disclosed herein, such as any of those described with respect to block 740 of algorithm 700 (FIG. 7). The output of the segmentation at block 840 may be refined data 847. The refined data 847 may include a more accurate representation of locational, dimensional, spatial, or any other information of the one or more agricultural objects identified therein, such as the crop edge. For example, the refined data 847 may include finer and more accurate distinctions between agricultural objects and the ground, distinctions between types of agricultural objects (e.g., plant types or structures), locational information of agricultural objects, dimensional information of agricultural objects therein than in the second fused data 837 used to generate the refined data 847.

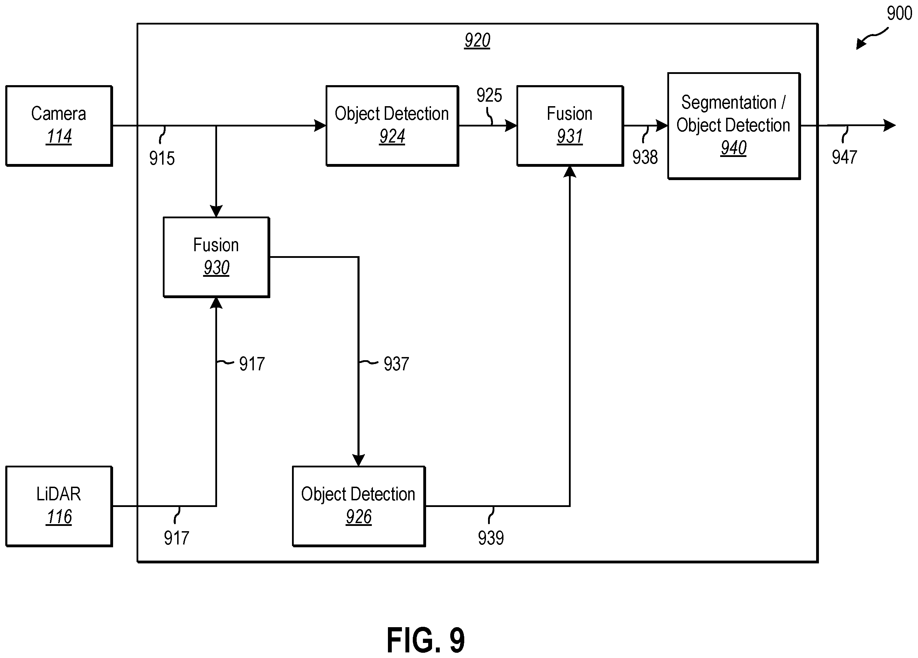

FIG. 9 is a schematic of an algorithm 900 to identify one or more agricultural objects based on image data and LiDAR data, according to at least one embodiment of the disclosure. The algorithm 900 may be performed by the computing device, such as by an imaging controller 920 therein. The imaging controller 920 may be similar or identical to the imaging controller 120, 720, or 820 in one or more aspects. The one or more cameras 114 and the at least one LiDAR system 116 may be operably coupled to the imaging controller 920 (or computing device including the imaging controller 920).

The algorithm 900 includes receiving the image data 915 from the one or more cameras 114 and receiving the LiDAR data 917 from the one or more LiDAR systems 916 operably coupled to the imaging controller 920. The algorithm 900 includes fusing the image data 915 with the LiDAR data 917 at block 930 to output the fused data 937 (e.g., fused point cloud). At block 926, the (first) fused data 937 may be processed with an object detection operation (e.g., object detection DNN) to identify on or more agricultural objects therein and generate labeled and fused data 939. The algorithm 900 includes performing object detection on the image data 915 at block 924 to output labeled image data 925. The object detection may be similar or identical to object detection performed on any of the image data disclosed herein, such as with segmentation masks, an agricultural object DNN, or the like to produce labeled image data 925.

The algorithm 900 includes fusing the labeled image data 925 to the labeled and fused data 939 at block 931 to produce second fused data 938 having information from the image data 915, the LiDAR data 917, the fused data 937, the labeled image data 925, and the labeled and fused data 939, such as any labels and metadata therein. Such fusion combines two previously segmented sets of data to generate a more accurate representation of the agricultural objects in the agricultural environment than in the labeled and fused data 939 or labeled image data 925 alone.

After generating the second fused data 938, the imaging controller 920 may segment the second fused data 938 (e.g., second fused point cloud) to refine positional information and dimensional information of the one or more agricultural objects within the second fused point cloud and generate refined data 947 (e.g., a refined point cloud) at block 940. The second fused data 938 may be segmented using any of the segmentation techniques disclosed herein, such as any of those described with respect to block 740 of algorithm 700 (FIG. 7). The output of the segmentation at block 940 may be refined data 947. The refined data 947 may include a more accurate representation of locational, dimensional, spatial, or any other information of the one or more agricultural objects identified therein than in the second fused data 938 used to generate the refined data 947.

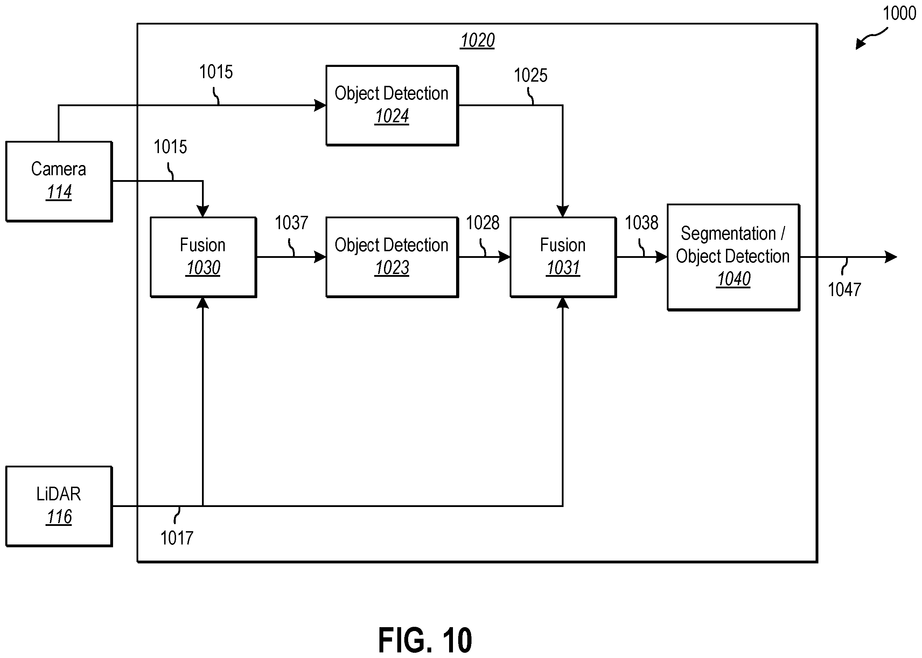

FIG. 10 is a schematic of an algorithm 1000 to identify one or more agricultural objects based on image data and LiDAR data, according to at least one embodiment of the disclosure. The algorithm 1000 may be performed by the computing device, such as by an imaging controller 1020 therein. The imaging controller 1020 may be similar or identical to the imaging controller 120, 720, 820, or 920 in one or more aspects. The one or more cameras 114 and the at least one LiDAR system 116 may be operably coupled to the imaging controller 1020 (or computing device including the imaging controller 1020).

The algorithm 1000 includes receiving the image data 1015 from the one or more cameras 114 and receiving the LiDAR data 1017 from the one or more LiDAR systems 116 operably coupled to the imaging controller 1020. The algorithm 1000 includes fusing the image data 1015 with the LiDAR data 1017 at block 1030 to output the fused data 1037 (e.g., fused point cloud). Separately, at block 1024, the image data 1015 may also be processed with an object detection operation (e.g., object detection DNN) to identify on or more agricultural objects therein to generate labeled image data 1025. At block 1023, the fused data 1037 may be processed with object detection operation to produce the labeled and fused data 1028. The labeled and fused data 1028, the labeled image data 1025, and the LiDAR data 1017 may be fused in the second fusion at block 1031. The second fusion at block 1031 generates the second fused data 1038, which includes information from the labeled and fused data 1028, the labeled image data 1025, and the LiDAR data 1017, such as any labels and metadata therein.

After generating the second fused data 1038, the imaging controller 1020 may segment the second fused data 1038 (e.g., second fused point cloud) to refine positional information and dimensional information of the one or more agricultural objects within the second fused data to generate refined data 1047 (e.g., a refined point cloud) at block 1040. The second fused data 1038 may be segmented using any of the segmentation techniques disclosed herein, such as any of those described with respect to block 740 of algorithm 700 (FIG. 7). The output of the segmentation at block 1040 may be refined data 1047. The refined data 1047 may include a more accurate representation of locational, dimensional, spatial, or any other information of the one or more agricultural objects identified therein than in the second fused data 1038 used to generate the refined data 1047.

Processing speed, computational burden, and power usage efficiencies of the systems, vehicles, and processes disclosed herein are also realized by using unrectified image data from the one or more cameras. By avoiding rectification of a fisheye image to a flat 2D image to fuse the image data to the LiDAR data, the computational burden and time of that process is eliminated from the image processing, object detection, and fusion processes. Though, in some embodiments, the image data may be rectified.

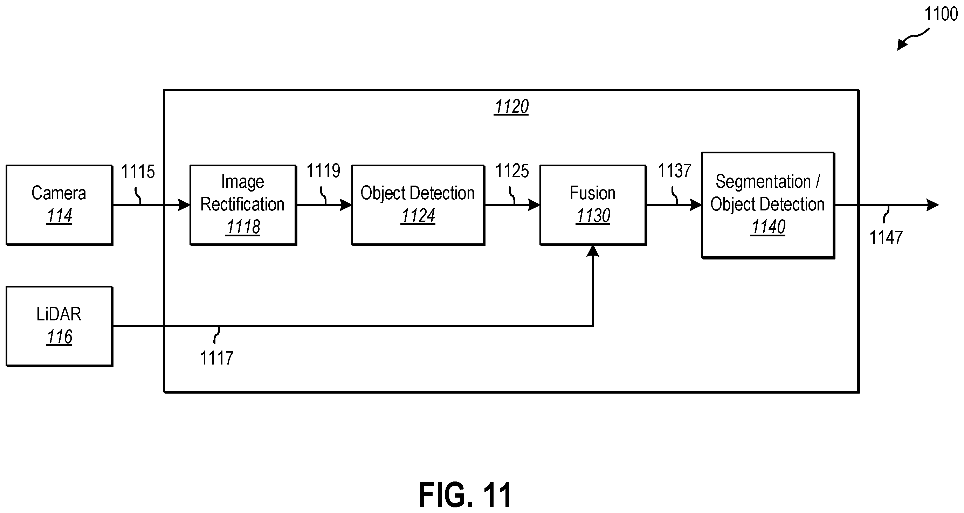

FIG. 11 is a schematic of an algorithm 1100 to identify one or more agricultural objects based on image data and LiDAR data, according to at least one embodiment of the disclosure. The algorithm 1100 may be performed by the computing device, such as by an imaging controller 1120 therein. The imaging controller 1120 may be similar or identical to the imaging controller 120, 720, 820, 920, 1020, in one or more aspects. The one or more cameras 114 and the at least one LiDAR system 116 may be operably coupled to the imaging controller 1120 (or computing device including the imaging controller 1120).

The algorithm 1100 includes receiving the image data 1115 from the one or more cameras 114 and receiving the LiDAR data 1117 from the one or more LiDAR systems 116 operably coupled to the imaging controller 1120. The algorithm 1100 includes rectifying the image data 1115, at block 1118, to generate rectified image data 1119. The image data 1115 may be rectified from a fisheye image to a flat image. The image data 1115 may be rectified using planar rectification, cylindrical rectification, or polar rectification techniques. The rectification may take the image data 1115 from a curved representation to a planar representation of the image data, or vice versa. Such a rectification may be performed to bring the image data 1115 to one or more planar representations corresponding to the LiDAR data.

At block 1124, the rectified image data 1119 may be processed with one or more object detection operations to generate labeled image data 1125 having information from the image data 1115 and the rectified image data 1119 therein. The labeled image data 1125 may be fused with the LiDAR data 1117 at block 1130 to produce the fused data 1137. At block 1140, the fused data 1137 may be segmented such as with one or more object detection operations to identify one or more agricultural objects therein (and characteristics thereof) and generate refined data 1147 (e.g., a refined point cloud). The refined data 1147 includes information from LiDAR data 1117, the labeled image data 1125, and the rectified image data 1119, such as any labels and metadata therein. The refined data 1147 may include a more accurate representation of locational, dimensional, spatial, or any other information of the one or more agricultural objects identified therein than in the fused data 1137 used to generate the refined data 1047.

In some embodiments, the agricultural objects may be identified and located with the agricultural environment using only LiDAR data. In some embodiments, the LiDAR data may be converted to image data using one or more operations. Such image data may be used in lieu or in addition to image data obtained directly from a camera.

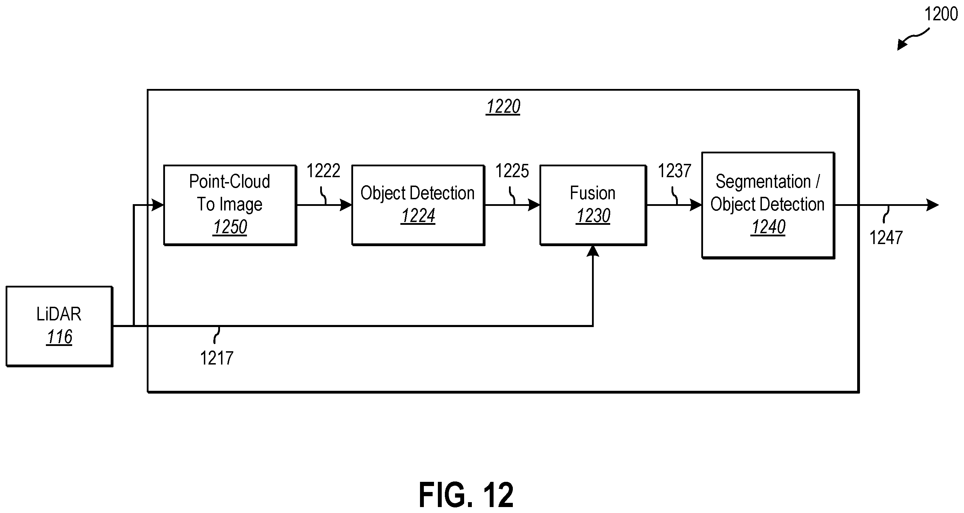

FIG. 12 is a schematic of an algorithm 1200 to identify one or more agricultural objects based on LiDAR data, according to at least one embodiment of the disclosure. The algorithm 1200 may be performed by the computing device, such as by an imaging controller 1220 therein. The imaging controller 1220 may be similar or identical to the imaging controller 120, 720, 820, 920, 1020, or 1120, in one or more aspects. The one or more cameras 114 and the at least one LiDAR system 116 may be operably coupled to the imaging controller 1220 (or computing device including the imaging controller 1220).

As shown, the LiDAR data 1217 may be supplied from the LiDAR system 116 to the imaging controller 1220. At block 1250, the LiDAR data 1217 may be processed with a point cloud-to-image conversion operation to translate the LiDAR data 1217 (e.g., 3D point cloud) to a 2D representation (or plurality thereof) to generate 2D LiDAR data 1222. The 2D LiDAR data may include labels for spatial data (e.g., depth, azimuth, location) of the pixels of the 2D representation. At block 1224, the 2D LiDAR data 1222 may be processed with one or more object identifier operations (as disclosed herein for image data or LiDAR data) to identify agricultural objects therein and generate labeled 2D LiDAR data as labeled image data 1225. At block 1230, the labeled image data 1225 and the LiDAR data 1217 may be fused to generate fused data 1237 having the information from

At block 1240, the fused data 1237 may be segmented such as with one or more object detection operations to identify one or more agricultural objects therein (and characteristics thereof) and generate refined data 1247 (e.g., a refined point cloud). The refined data 1247 includes information from LiDAR data 1227, the labeled image data 1225, and fused data 1237, such as any labels and metadata therein. The refined data 1247 may include a more accurate representation of locational, dimensional, spatial, or any other information of the one or more agricultural objects identified therein than in the fused data 1237 used to generate the refined data 1247.

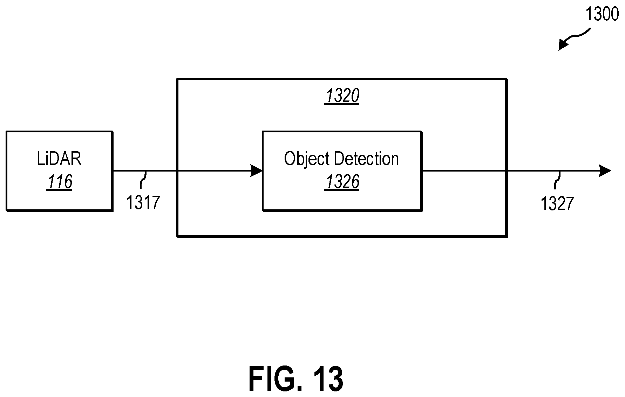

In some embodiments, the agricultural objects (and characteristics thereof) in the agricultural environment may be identified directly from LiDAR data. FIG. 13 is a schematic of an algorithm 1300 to identify one or more agricultural objects based on LiDAR data alone, according to at least one embodiment of the disclosure. The algorithm 1300 may be performed by the computing device, such as by an imaging controller 1320 therein. The imaging controller 1320 may be similar or identical to the imaging controller 120, 720, 820, 920, 1020, 1120, or 1220, in one or more aspects. The at least one LiDAR system 116 may be operably coupled to the imaging controller 1320 (or computing device including the imaging controller 1320).

At block 1326, the LiDAR data 1317 (e.g., a point cloud) may be processed using one or more object detection operations, such as an agricultural object detection DNN trained to analyze LiDAR data to identify one or more agricultural object based on training data including ground truth data for one or more agricultural objects. The block 1326 may output labeled LiDAR data 1327 having labels for voxels or pixels therein. The labels may include agricultural object labels or any other type of label disclosed herein. The labeled LiDAR data may be output to an additional controller to facilitate control of the agricultural vehicle according to the agricultural objects identified in the labeled LiDAR data.

In the interest of brevity, one or more aspects of such acts, blocks, operations, or techniques may not be repeated in detail herein. Any of the acts, blocks, operations, or techniques disclosed herein may be similar or identical to any of the similarly named or numbered acts, blocks, operations, or techniques disclosed herein. For example, the image data 715 (FIG. 7) may be similar or identical to the image data 1115 in one or more aspects, and fused data 737 may be similar or identical to the fused data 1137 in one or more aspects. Any of the acts, blocks, operations, or techniques disclosed herein may be carried out according to machine-readable and executable instructions stored on a non-transitory computer-readable medium of a computing device or imaging controller, such as when executed by a processor.

In some embodiments, one or more portions of any of the algorithms disclosed herein may be performed by a computing device (e.g., server or computer) on the agricultural vehicle or may be performed remotely from the agricultural vehicle, such as in another computing device in wireless communication with the computing device of the agricultural vehicle.

After generating the fused data (e.g., fused point cloud) or refined data (e.g., refined point cloud), the fused data or refined data may be output to, and received by, the additional controller. The additional controller may generate a control signal for the agricultural vehicle based on the fused data, refined data, or both. For example, the imaging controller 720 may provide the fused data 737 or refined data 747 (FIG. 7) to the additional controller 126 (FIG. 1) to facilitate control of one or more operations of the vehicle 100. By way of non-limiting example, based on the fused data or refined data (carrying metadata from the image data, labeled image data, LiDAR data, labeled LiDAR data) received by the additional controller, the a route map may be built (e.g., using key points) by the computing device and vehicle may be navigated by the at least one additional controller (e.g., by controlling one or more of the propulsion system, the steering system, the braking system, and the navigation system). Accordingly, the fused data or refined data may facilitate autonomous operation of the vehicle, such as to interact with the one or more agricultural objects in a selected manner (e.g., object avoidance, spraying, planting, fertilizing, pick-up, chopping, mowing, swathing, or any other activity).

In some embodiments, responsive to receiving the fused data, the at least one additional controller may perform an object avoidance operation to avoid one or more of the instances of objects in the fused data. In some embodiments, the fused data is received by the I/O device 132 (FIG. 1) and displayed on a display of the I/O device. The operator of the vehicle may view the displayed fused data to facilitate navigation of the vehicle, and any implements associated therewith using real-time data.

In some embodiments, the computing device provides the fused data to a server (e.g., a remote server), where the fused data may be used for remote planning operations. For example, the fused data may include identification of agricultural objects (e.g., locations, such as GPS coordinates) present in an agricultural environment. The agricultural objects may include one or more static objects, such as one or more of windmills, rocks, boulders, obstructions in the field, buildings, trees, and other objects. In some embodiments, the agricultural objects include plants, and may include a status of crops (e.g., a stage of growth of the crops, standing, mowed, harvested) and may be analyzed remotely to provide a route therearound or for picking up (e.g., baling) the agricultural object(s).

Any of the vehicles, systems, equipment, or techniques disclosed herein may be used in methods of operating agricultural vehicles or methods of determining a route to interact with an agricultural object (e.g., crop edge or crops therebehind) based on image data and LiDAR data of an agricultural environment.

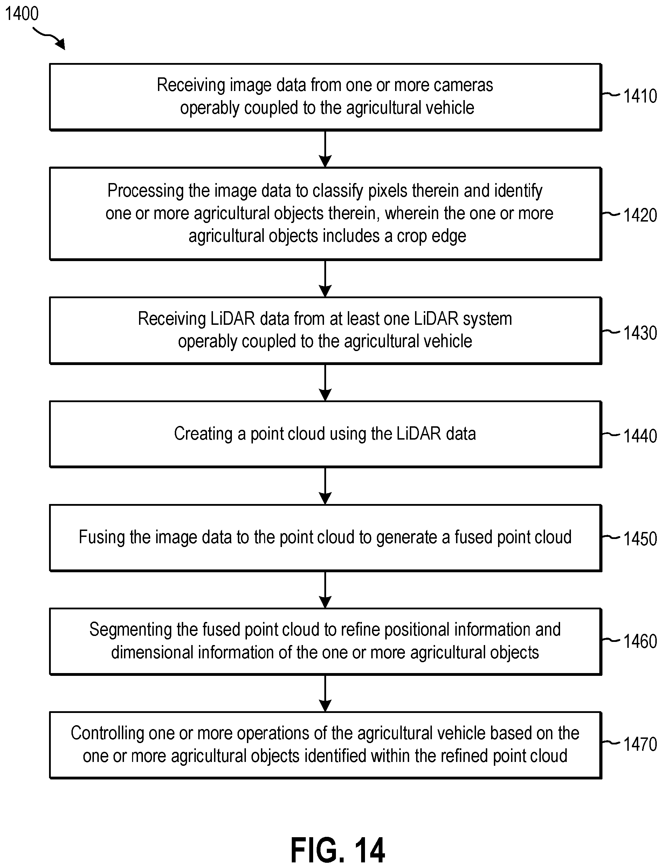

FIG. 14 is a flow diagram of a method 1400 for operating an agricultural vehicle in an agricultural environment, according to at least some embodiments of the disclosure. The method 1400 includes an act 1410 receiving image data from one or more cameras operably coupled to the agricultural vehicle. The method 1400 includes the act 1420 processing the image data to classify pixels therein and identify one or more agricultural objects therein, wherein the one or more agricultural objects include a crop edge. The method 1400 includes the act 1430 receiving LiDAR data from at least one LiDAR system operably coupled to the agricultural vehicle wherein a field of view of the at least one LiDAR system at least partially overlaps a field of view of the one or more cameras. The method 1400 includes the act 1440 creating a point cloud using the LiDAR data. The method 1400 includes the act 1450 fusing the image data to the point cloud to generate a fused point cloud having image data mapped to corresponding points within the point cloud. The method 1400 includes the act 1460 segmenting the fused point cloud to refine positional information and dimensional information of the one or more agricultural objects within the fused point cloud to generate a refined point cloud. The method 1400 includes the act 1470 controlling one or more operations of the agricultural vehicle based on the one or more agricultural objects identified within the refined point cloud. The method 1400 provides for autonomous detection and interaction with one or more agricultural objects in an agricultural environment by an agricultural vehicle, such as providing accurate, safe, and efficient navigation around crop edges for harvesting, mowing, spraying, planting, or fertilizing by the agricultural vehicle (and/or an agricultural implement associated therewith). In some embodiments, the method 1400 may include more or fewer acts than the acts 1410-1470. For example, one or more of the acts 1410-1470 may be omitted or mays be split into multiple acts.

The act 1410 of receiving image data from one or more cameras operably coupled to the agricultural vehicle may include receiving any of the image data disclosed herein, such as RGB data, monochromatic data, SWIR data, or the like for the pixels in the image data. The one or more cameras may be any of the cameras disclosed herein in any of the positions on the agricultural vehicle disclosed herein, such as in a front facing position over the cab of the agricultural vehicle. The image data may be received by the computing device or imaging controller therein. The image data may include metadata associated therewith, such as metadata for each pixel in an image. Receiving the image data may be responsive to an instruction to the one or more cameras to generate image data at a selected instance or location. The image data may be generated and received after a selected duration of time has lapsed or a selected distance has been travelled by the agricultural vehicle. Accordingly, the image data may include a plurality of images of the agricultural environment.

The act 1420 of processing the image data to classify pixels therein and identify one or more agricultural objects therein, wherein the one or more agricultural objects includes crop edges may include processing the image data using one or more object detection algorithms, segmentation operations or segmentation masks, agricultural object detection DNNs or any other image processing technique disclosed herein. Processing the image data to classify pixels therein and identify one or more agricultural objects therein may include identifying crops or a crop edge and one or more of positional, dimensional, or other information of the crops or crop edge in the agricultural environment. For example, processing the image data to classify pixels therein and identify the one or more agricultural objects may include classifying pixels and identifying one or more dimensional and positional (e.g., location) characteristics of the one or more agricultural objects, such as identifying one or more of a left boundary, a right boundary, a width, a height, a curvature, or a volume of the crops or crop edge at one or more points in a longitudinal direction of the crop edge.

In some examples, processing the image data to classify pixels therein and identify one or more agricultural objects therein may include labeling pixels with the one or more agricultural objects therein, with a label including one or more of a classification (that the agricultural object is present), timestamp, location, RGB value, or any other information of the pixel with the label. Such a label may be present in the metadata of the pixel.

The act 1430 of receiving LiDAR data from at least one LiDAR system operably coupled to the agricultural vehicle includes receiving any of the LiDAR data disclosed herein with the computing device or imaging controller therein. The LiDAR data may include 2D or 3D information of the agricultural environment, such as in a 2D or 3D point cloud having data therein indication relative position of agricultural objects (and portions thereof) with respect to the ground and other agricultural objects in the agricultural environment. For example, the LiDAR data may include a point cloud having points therein indicating surfaces of one or more of an agricultural vehicle, a person, an animal, one or more plants (e.g., crops, crop edge, cut crops, piled crops, swathed crops) or the like. The LiDAR data may be generated and received from any of the LiDAR systems disclosed herein, such as a flash LiDAR.

The LiDAR data may include metadata associated therewith, such as metadata for each point in a point cloud. Receiving the LiDAR may be responsive to an instruction to the at least one LiDAR system to generate LiDAR data at a selected instance or location. The LiDAR data may be generated and received after a selected duration of time has lapsed or a selected distance has been travelled by the agricultural vehicle. Accordingly, the LiDAR data may include a plurality of images of the agricultural environment. The LiDAR data

In some examples, the generating and receiving the image data and the LiDAR data may be carried out contemporaneously at one or more instances and/or one or more selected locations, such as responsive to signals (e.g., pulses sent by a capture trigger) generate the image data sent by the imaging controller (e.g., a timer therein), a GNSS, or the like

The act 1440 of creating a point cloud using the LiDAR data may include assembling a plurality of points in the LiDAR data into a 2D or 3D representation of the agricultural environment. The LiDAR data or point cloud may include metadata for the individual points therein. The LiDAR data or point cloud may include labels for the individual points therein.

In some examples, the LiDAR data may be provided in a point cloud format from the at least one LiDAR system. In such examples, the act 1440 may be a part of the act 1430 or may be omitted.

The act 1450 of fusing the image data to the point cloud to generate a fused point cloud having image data mapped to corresponding points within the point cloud may include fusing the image data to the point cloud using any of the fusion techniques disclosed herein, such as via one or more of a Hungarian algorithm, a Bayesian estimation for sensor fusion, a Kalman filter, and Bipartite Graph Matching operation to match the LiDAR data with the image data, or the like. The fused data may be similar identical to any of the fused data herein, such as being in the form of a fused point cloud. The fused data may carry any of the labels, metadata, or other information from the image data (e.g., raw or labeled image data) and LiDAR data (e.g., raw or labeled LiDAR data) used to generate the fused data.

In some examples, only the labeled image data (e.g., image data labeled as having an agricultural object therein) may be fused to the LiDAR data (e.g., point cloud). For example, only image data having labels indicating the presence of the ground, a vehicle, a crop structure (e.g., crop edge), an animal, or a structure may be fused to the point cloud. In such examples, the computational burden, time, and power expenditures are drastically reduced compared to fusing all the image data to the LiDAR data, without sacrificing image resolution of the agricultural objects identified therein. Such efficiencies may be passed through to later processing on the fused data.

In some examples, the act 1450 may include fusing the LiDAR data to the image data (e.g., 3D to 2D projection) as disclosed with respect to the algorithms 700 and 800 above.

The act 1460 of segmenting the fused point cloud to refine positional information and dimensional information of the one or more agricultural objects within the fused point cloud to generate a refined point cloud may include performing one or more segmentation operations on the fused point cloud (e.g., fused data). For example, the one or more segmentation operations may include applying one or more of semantic segmentation, instance segmentation, panoptic segmentation, or the like to the fused data; processing the fused data with segmentation software (e.g., PointNet, PointNet++, VoxelNet, RandLA-Net); or applying an object detection DNN trained with ground truth data of one or more agricultural objects. The additional segmentation operation may provide a more well-defined differentiation between the one or more agricultural objects (e.g., crop edge) and the agricultural environment than fusion or image data object detection operations, to give a more accurate digital representation of the agricultural objects in the environment. The more accurate positional and dimensional information may allow more precise interaction with the agricultural objects, such as greater control of navigating between, and otherwise interacting with (e.g., moderating speed or changing direction to avoid) crops in or behind (e.g., inward from) the crop edge.

The refined data may carry any of the labels, metadata, or other information from the image data (e.g., raw or labeled image data) and LiDAR data (e.g., raw or labeled LiDAR data) used to generate the refined data (e.g., refined point cloud).

Segmenting the fused data may include identifying the crop edge and one or more of positional, dimensional, or other information of the crop edge (or crops therein) in the agricultural environment from the fused data. For example, segmenting the fused data to identify the one or more agricultural objects may include identifying one or more dimensional and positional (e.g., location) characteristics of the one or more agricultural objects, such as identifying one or more of a leftmost boundary, a rightmost boundary, a width, a height, a curvature, or a volume of the crops or crop row at one or more point in a longitudinal direction of the crop edge.

In some examples, fusing the image data to the LiDAR data to produce the fused data may include segmenting (e.g., applying one or more object detection operations to) the fused data. In such embodiment, the acts 1450 and 1460 may be combined into a single act.

The refined point cloud (e.g., refined data) may be used to control the agricultural vehicle to interact with the agricultural objects in on one or more ways, such as object avoidance, pick-up an agricultural object, spray an agricultural object, clean adjacent to the agricultural object, mowing an agricultural object, or the like according to a route map built from the refined data.

The act 1470 of controlling one or more operations of the agricultural vehicle based on the one or more agricultural objects identified within the refined point cloud may be carried out by the computing device (e.g., imaging controller and/or additional controller) or an operator (e.g., driver) of the agricultural vehicle.

The act 1470 may include controlling the agricultural vehicle with the additional controller. The at least one additional controller is configured to perform one or more control operations of the agricultural vehicle based on at least one of the image data, the fused point cloud, or the refined point cloud. In some embodiments, the at least one additional controller may be configured to generate a route map for the agricultural vehicle (or implement associated therewith) to interact with the one or more agricultural objects identified in the image data, the fused point cloud, or the refined point cloud. For example, the at least one additional controller may be configured to receive the refined data (e.g., refined point cloud) with positional information and the dimensional information of the one or more agricultural objects therein and to generate a route map for controlling the agricultural vehicle to interact with the at least one agricultural object (e.g., crop edge) and any other agricultural objects identified within the refined data.

In some embodiments, controlling one or more operations of the agricultural vehicle based on the one or more agricultural objects identified within the refined point cloud may include causing the agricultural vehicle to align an agricultural implement operably coupled thereto to the at least one agricultural object (e.g., crop edge), modulating a speed of the agricultural vehicle to cause the agricultural implement to treat the agricultural object or area near the same at a selected rate, or avoid driving over the agricultural object with the wheels of the agricultural vehicle. For example, the at least one additional controller may be configured to adjust a speed of the agricultural vehicle based on a volume estimate of the crops in or behind the crop edge.

The route map may be based on one or more key points. In such examples, the method 1400 may include determining a plurality of key points indicating a position of the crop edge from the image data and building a route map for the agricultural vehicle along the plurality of key points. Determining the key points may be carried out as disclosed herein. For example, determining the key points may include identifying one or more of the right boundary, the left boundary, the height, the curvature, or the volume of the agricultural object (e.g., crop edge) at one or more points or sections along a longitudinal length of the agricultural object. In some embodiments, the route may be based on an offset distance from the key points effective to position wheels of the agricultural vehicle in a position to travel outside of the crop edge to avoid running over the crops. Such offsets also be used to position an intake of a harvester, blades or a mower, nozzles of a sprayer boom, a row cleaner, blades of a chopper, or seed drills of the agricultural vehicle or implement therebehind with the crop edge or crops therebehind, such as harvest, mow, or otherwise interact with the crops. Accordingly, the act 1470 may include controlling the agricultural vehicle to align wheels of the agricultural vehicle (and or agricultural implement) outside of the crop edge effective to avoid running over the crops in or behind the crop edge with the wheels. In some embodiments, alignment to the agricultural implement may include alignment to one or more of the intake of the harvester, blades of a mower, auger, sprayer, or the like to interact with the crops in or behind the crop edge in a selected way.

The method 1400 may be modified to process data according to any of the algorithms 700-1300 disclosed herein. A method for determining a presence and position of an agricultural object and controlling the agricultural vehicle responsive thereto may include any of the acts, techniques, operations, equipment, systems, or algorithms disclosed herein.

Any of the acts, algorithms, operations, or techniques disclosed herein may be carried out by a computing device responsive to machine-readable and executable instructions stored on a non-transitory computer-readable medium when executed by a processor of the computing device.

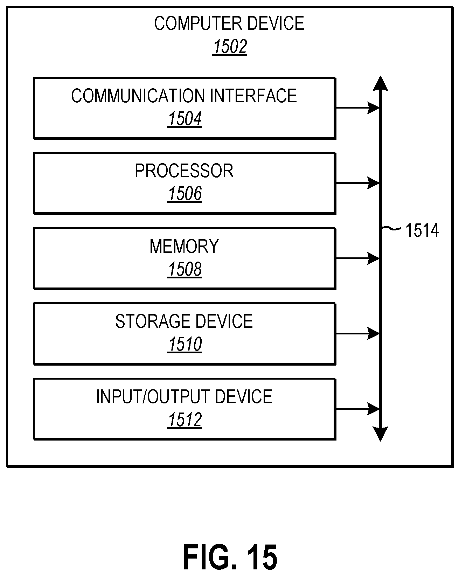

FIG. 15 is a schematic of a computer device 1502, in accordance with embodiments of the disclosure. The computer device 1502 may correspond to the computing device 118 (FIG. 1). The computer device 1502 may include a communication interface 1504, at least one processor 1506, a memory 1508, a storage device 1510, an input/output device 1512, and a bus 1514. The computer device 1502 may be used to implement various functions, operations, acts, processes, and/or methods disclosed herein, such as the method 1400 or any of the algorithms 700-1300 disclosed herein.

The communication interface 1504 may include hardware, software, or both. The communication interface 1504 may provide one or more interfaces for communication (such as, for example, packet-based communication) between the computer device 1502 and one or more other computing devices or networks (e.g., a server). As an example, and not by way of limitation, the communication interface 1504 may include a network interface controller (NIC) or network adapter for communicating with an Ethernet or other wire-based network or a wireless NIC (WNIC) or wireless adapter for communicating with a wireless network, such as a Wi-Fi.

The at least one processor 1506 may include hardware for executing instructions, such as those making up a computer program. By way of non-limiting example, to execute instructions, the at least one processor 1506 may retrieve (or fetch) the instructions from an internal register, an internal cache, the memory 1508, or the storage device 1510 and decode and execute them to execute instructions. In some embodiments, the at least one processor 1506 includes one or more internal caches for data, instructions, or addresses. The at least one processor 1506 may include one or more instruction caches, one or more data caches, and one or more translation look aside buffers (TLBs). Instructions in the instruction caches may be copies of instructions in the memory 1508 or the storage device 1510.

The memory 1508 may be coupled to the at least one processor 1506. The memory 1508 may be used for storing data, metadata, and programs for execution by the processor(s). The memory 1508 may include one or more of volatile and non-volatile memories, such as Random-Access Memory ("RAM"), Read-Only Memory ("ROM"), a solid-state disk ("SSD"), Flash, Phase Change Memory ("PCM"), or other types of data storage. The memory 1508 may be internal or distributed memory.

The storage device 1510 may include storage for storing data or instructions. As an example, and not by way of limitation, storage device 1510 may include a non-transitory storage medium described above. The storage device 1510 may include a hard disk drive (HDD), Flash memory, an optical disc, a magneto-optical disc, magnetic tape, or a Universal Serial Bus (USB) drive or a combination of two or more of these. The storage device 1510 may include removable or non-removable (or fixed) media, where appropriate. The storage device 1510 may be internal or external to the storage device 1510. In one or more embodiments, the storage device 1510 is non-volatile, solid-state memory. In other embodiments, the storage device 1510 includes read-only memory (ROM). Where appropriate, this ROM may be a mask programmed ROM, programmable ROM (PROM), erasable PROM (EPROM), electrically erasable PROM (EEPROM), electrically alterable ROM (EAROM), or Flash memory or a combination of two or more of these.

The storage device 1510 may include machine-readable and executable instructions ("machine-executable code") stored thereon. The storage device 1510 may include, for example, a non-transitory computer-readable storage medium. The machine-executable code includes information describing functional elements that may be implemented by (e.g., performed by) the at least one processor 1506. The at least one processor 1506 is adapted to implement (e.g., perform) the functional elements described by the machine-executable code. In some embodiments the at least one processor 1506 may be configured to perform the functional elements described by the machine-executable code sequentially, concurrently (e.g., on one or more different hardware platforms), or in one or more parallel process streams.

When implemented by the at least one processor 1506, the machine-executable code is configured to adapt the at least one processor 1506 to perform operations of embodiments disclosed herein. For example, the machine-executable code may be configured to adapt the at least one processor 1506 to perform at least a portion or a totality of the method 1400 of FIG. 14. As another example, the machine-executable code may be configured to adapt the at least one processor 1506 to perform at least a portion or a totality of the operations discussed for the vehicle 100 of FIG. 1. As a specific, non-limiting example, the machine-executable code may be configured to adapt the at least one processor 1506 to cause the I/O device 132 of the vehicle 100 to display surroundings of the vehicle 100 including labeled instances of objects surrounding the vehicle, as described above with reference to the imaging controller 120, and the method 1400 of FIG. 14. In another non-limiting example, the machine-executable code may be configured to adapt the at least one processor 1506 to cause the vehicle 100 to perform at least one navigation operation, as described above with reference to the method 1400 of FIG. 14.

The input/output device 1512 may allow an operator of the vehicle 100 to provide input to, or receive output from, the computer device 1502. The input/output device 1512 may include a mouse, a keypad or a keyboard, a joystick, a touch screen, a camera, an optical scanner, network interface, modem, other known I/O devices, or a combination of such I/O interfaces.

In some embodiments, the bus 1514 (*e.g.,* a Controller Area Network (CAN) bus, an ISOBUS (ISO 11783 Compliant Implement Control)) may include hardware, software, or both that couples components of computer device 1502 to each other and to external components.

Any of the computing devices and/or controllers 120-1320 or 126 disclosed herein may be similar or identical to the controller 1500. Such controllers may have at least one processor and at least one non-transitory computer-readable storage medium having instructions thereon that, when executed by the at least one processor, cause the controller to perform any of the acts disclosed herein.

In some embodiments, any of the controllers 120-1520 or 126 disclosed herein may be implemented as machine-readable and executable instructions stored on the non-transitory computer-readable storage medium. In such examples, any of the controller(s) mays be present and executed as machine-executable code stored the non-transitory computer-readable storage medium within the one or more computing devices operably coupled to the agricultural vehicle.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. An agricultural vehicle, comprising:
one or more cameras operably coupled to the agricultural vehicle;
at least one LiDAR system operably coupled to the agricultural vehicle; and
an imaging controller operably coupled to the at least one LiDAR system and the one or more cameras, the imaging controller comprising:
at least one processor; and
at least one non-transitory computer-readable storage medium having instructions thereon that, when executed by the at least one processor, cause the imaging controller to:
receive image data from the one or more cameras;
process the image data to classify pixels therein and identify one or more agricultural objects therein, wherein the one or more agricultural objects includes a crop edge;
receive LiDAR data from the at least one LiDAR system;
create a point cloud using the LiDAR data;
fuse the image data to the point cloud to generate a fused point cloud having the
image data fused to corresponding points within the point cloud; and segment the fused point cloud to refine positional information and dimensional
information of the one or more agricultural objects within the fused point cloud to generate a refined point cloud.

2. The agricultural vehicle of claim 1, wherein the imaging controller includes instructions to identify one or more boundaries of the crop edge, a curvature of the crop edge, and a volume of the crops spaced from the crop edge in a longitudinal direction of the crop edge based on one or more of the image data, the fused point cloud, or the refined point cloud.

3. The agricultural vehicle of claim 2, wherein the imaging controller includes instructions to:
identify a surface curvature of one or more sections of the crop edge from one or more of the image data, the fused point cloud, or the refined point cloud; and
generate a volume estimate for sections of the crops spaced inwardly from the crop edge, from one or more of a curvature of the crop edge or information about material types of the crops forming the crop edge.

4. The agricultural vehicle of claim 3, wherein the information about material types in the crop edge includes classified pixels from the image data identifying one or more plant species within the crop edge.

5. The agricultural vehicle of any one of claims 1 through 4, wherein the imaging controller includes instructions thereon that, when executed by the at least one processor, cause the imaging controller to:
process the image data from the one or more cameras using one or more agricultural object detection deep neural networks trained with an agricultural dataset to generate labeled image data;
analyze the LiDAR data in the point cloud using a point cloud detection deep neural network trained with another agricultural dataset to generate the point cloud having labeled LiDAR data; and
fuse the labeled image data with the labeled LiDAR data to form the fused point cloud having labeled image data and labeled LiDAR data therein.

6. The agricultural vehicle of any one of claims 1 through 5, wherein:
the at least one LiDAR system includes a flash LiDAR having at least one light emitter and at least one LiDAR sensor; and
at least one of the one or more cameras is located within 1 meter of the at least one LiDAR sensor and has a field of view that at overlaps with a field of view of the at least one LiDAR sensor.

7. The agricultural vehicle of any one of claims 1 through 6, wherein the imaging controller includes instructions thereon that, when executed by the at least one processor, cause the imaging controller to cause:
the at least one LiDAR system to generate the LiDAR data at a plurality of instances; and
the one or more cameras to generate the image data contemporaneously with the LiDAR data at the plurality of instances.

8. The agricultural vehicle of claim 5, wherein the imaging controller includes instructions thereon that, when executed by the at least one processor, cause the imaging controller to fuse the image data of corresponding instances to the point cloud to generate the fused point cloud having the image data mapped to LiDAR data points of corresponding instances within the point cloud.

9. The agricultural vehicle of any one of claims 1 through 6, wherein the imaging controller includes instructions thereon that, when executed by the at least one processor, cause the imaging controller to perform one or more object segmentation operations on the image data using an object detection deep neural network trained with an agricultural dataset to identify the one or more agricultural objects therein.

10. The agricultural vehicle of any one of claims 1 through 7, wherein the imaging controller includes instructions thereon that, when executed by the at least one processor, cause the imaging controller to segment the fused point cloud to differentiate between one or more crops in the crop edge and ground there beneath.

11. The agricultural vehicle of any one of claims 1 through 8, wherein the imaging controller includes instructions thereon that, when executed by the at least one processor, cause the imaging controller to segment the fused point cloud to differentiate between one or more crops in the crop edge and one or more of undergrowth or weeds.

12. The agricultural vehicle of any one of claims 1 through 8, further comprising at least one additional controller configured to perform one or more control operations of the agricultural vehicle based on at least one of the image data, the fused point cloud, or the refined point cloud.

13. A method of operating an agricultural vehicle in an agricultural field, the method comprising:
receiving image data from one or more cameras operably coupled to the agricultural vehicle;
processing the image data to classify pixels therein and identify one or more agricultural objects therein, wherein the one or more agricultural objects includes a crop edge;
receiving LiDAR data from at least one LiDAR system operably coupled to the agricultural vehicle wherein a field of view of the at least one LiDAR system at least partially overlaps a field of view of the one or more cameras;
creating a point cloud using the LiDAR data;
fusing the image data to the point cloud to generate a fused point cloud having image data mapped to corresponding points within the point cloud;
segmenting the fused point cloud to refine positional information and dimensional information of the one or more agricultural objects within the fused point cloud to generate a refined point cloud; and
controlling one or more operations of the agricultural vehicle based on the one or more agricultural objects identified within the refined point cloud.

14. The method of claim 13, further comprising identifying one or more boundaries of the crop edge, a curvature of the crop edge, and a volume of crops spaced inwardly from the crop edge in a longitudinal direction of the crop edge based on one or more of the image data, the fused point cloud, or the refined point cloud.

15. The method of any one of claims 13 and 14, wherein processing the image data to classify pixels therein and identify one or more agricultural objects therein includes at least one of:
determining a plurality of key points indicating a position of the crop edge from the image data to build a route map for the agricultural vehicle along the plurality of key points; or
applying one or more segmentation masks to the image data to determine the positional information and the dimensional information of the one or more agricultural objects therein.
